# EUROPEAN PATENT APPLICATION

(11) **EP 2 276 247 A2**
(43) Date of publication of application: **19.01.2011**
(21) Application number: 10174118.9
(22) Date of filing: 27.06.2002
(51) Int. Cl.: H04N 7/08, H04N 5/76, H04N 1/00, H04B 1/16

(54) **Information supply system, information supply device and method, and information processing device and method**

(30) Priority: 29.06.2001 JP 2001198283
(62) Divisional of application: 02736179.9
(71) Applicant: Sony Corporation, Minato-ku Tokyo 108-0075 (JP)
(72) Inventor: Yamamoto, Tomoyuki, Minato-ku, Tokyo 108-0075 (JP); Ohnuma, Kensuke, Minato-ku, Tokyo 108-0075 (JP); Tsuruta, Yasushi, Minato-ku, Tokyo 108-0075 (JP)
(74) Representative: Mills, Julia

(57) **Abstract**

The present invention relates to an information processing device which can enhance using efficiency of commercial pictures. In a service server 3, meta-data added with a CM mark necessary to extract commercial pictures (CM) which are broadcasted while contained in a content are generated, and registered in a meta-data data base 302. The meta-data are transmitted to a reception terminal 2, and registered in a meta-data data base 204. When receiving a broadcast content, the reception terminal 2 extracts a content added with CM mark as CM, and registered into a CM data base 202 on the basis of meta-data registered in the meta-data data base 204. The present invention is applicable to a server for distributing commercial pictures.

## Description

### TECHNICAL FIELD

The present invention relates to an information supply system, information supply device and method, and information processing device and method, and particularly to an information supply system, information supply device and method and information processing device and method which enable secondary use of broadcast contents.

### BACKGROUND ART

The applicant of this application previously proposed secondary use of broadcast contents in Japanese Patent Application No. 2000-237671. In this proposal, contents broadcasted are temporarily accumulated in a receiver. Meta-data in which information for secondary use of the broadcast contents is described are separately distributed to the receiver. The receiver extracts and reproduces only the digests of the broadcast contents or only predetermined portions thereof on the basis of the meta-data. Accordingly, a viewer can watch/listen to only his/her desired portions within a limited time.

In many cases, broadcast contents contain commercial pictures (pictures of commercial films). When meta-data for allowing the secondary use of the broadcast contents except for the commercial pictures are distributed, the profits of sponsors which supply the broadcast contents on the assumption that viewers watch/listen to the commercial pictures may be lost.

### DISCLOSURE OF THE INVENTION

The present invention has been implemented in view of the foregoing situation, and has an object to enable secondary use of contents without losing the profits of sponsors.

In a first information supply system of the present invention, an information supply device generates reproduction data which define the reproduction sections of a content and the order thereof and contain prohibition information for prohibiting skip of predetermined information and distributes the reproduction data from the information supply device through a network to an information processing device; the information supply device reproduces pre-stored contents on the basis of the reproduction data; and in a case where skip of predetermined information is instructed by a user, the information processing device prohibits the skip of the predetermined position in spite of the instruction from the user when prohibition information is added or skips the predetermined information in response to the instruction from the user when no prohibition information is added.

An information supply device for supplying reproduction data for defining reproduction sections of a content and the order thereof through a network to an information processing device is equipped with generating means for generating reproduction data based on the content, detection means for detecting whether the predetermined information is contained in the content or not, and adding means for adding the reproduction data with the prohibition information for prohibiting the skip of the predetermined information when the predetermined information is detected by the detection means.

The predetermined information may be commercial information.

A first information supply method, a program for a first recording medium and a first program according to the present invention are characterized by comprising: a generating step of generating reproduction data based on a content; a detection step for detecting whether predetermined information is contained in the content; and an addition step of adding the reproduction data with prohibition information for prohibiting skip of the predetermined information when the predetermined information is detected through the processing of the detection step.

A first information processing device according to the present invention is characterized by comprising: reproducing means for reproducing a content on the basis of reproduction data; detecting means for detecting an instruction of skipping the content; judging means for judging whether prohibition information for prohibiting the skip of the content is added to the reproduction data when the skip instruction of the content is detected by the detection means; and control means for controlling the skip of the content on the basis of the judgment result of the judging means.

The predetermined information may be commercial information.

There may be further equipped reception means for receiving the content, and storage means for storing the content received by the reception means.

A first information processing method according to the present invention, a program of a second recording medium and a second program are characterized by comprising: a reproduction step of reproducing a constant based on reproduction data; a detection step of detecting an instruction of skipping the content; a judging step of judging whether prohibition information for prohibiting the skip of the content is added to the reproduction data when the skip instruction of the content is detected through the processing of the detection step; and a control step of controlling the skip of the content on the basis of the judgment result of the processing of the judging step.

In a second information supply system of the present invention, an information supply device generates reproduction data which define reproduction sections of a content and the order thereof and contain extraction information for extracting predetermined information contained in the content, and distributes the reproduction data from the information supply device through a network to an information processing device; and the information processing device receives and stores the content, extracts the predetermined information from the content received on the basis of the extraction information of the reproduction data distributed, and records the predetermined information so that the predetermined information can be read out independently from the content.

A second information processing device of the present invention is characterized by comprising: firsts reception means for receiving a content containing predetermined information; extracting means for extracting the predetermined information from the content received by the first reception means; and recording means for recording the predetermined information extracted by the extracting means so that the predetermined information can be read out independently from the content.

There may be further equipped selecting means for selecting one information from the predetermined information recorded in the recording means, and output means for outputting the predetermined information selected by the selecting means in connection with the output of the content.

There may be further equipped time counting means for performing time counting, and the output means may output the predetermined information in connection with the output of the content when a predetermined time is counted by the time counting means.

The output means may replace the predetermined information contained in the content by the predetermined information selected by the selecting means, and output it.

The output means may output the predetermined information at the head or end of the content.

There may be further equipped achieving means for achieving taste information of the user of the information processing device, and the selecting means may select one information from the predetermined information recorded by the recording means on the basis of the taste information achieved by the achieving means.

There may be further equipped second reception means for receiving from an information supply device through a network a selection signal which is used to select one information from the predetermined information recorded in the recording means and given every content or every user of information processing device, and the selecting means may select one information from the predetermined information recorded in the recording means on the basis of the selection signal received by the second reception means.

There may be further equipped achieving means for achieving section information corresponding to the sections of the content recorded in the recording means, and transmitting means for transmitting the section information achieved by the achieving means through the network to the information supply device.

There may be further equipped operation detecting means for detecting a user's operation on watching/listening of the content, and the transmitting means may further transmit the operation information detected by the operation detecting means through the network to the information supply device.

There may be further equipped watching/listening completed section information detecting means for detecting the watching/listening completed section information corresponding to a section watched/listened to by the user among the content recorded in the recording means, and the transmitting means may further transmit the watching/listening completed section information detected by the watching/listening completed section information detecting means through the network to the information supply device.

There may be further equipped holding means for holding the selection signal received by the second reception means, and specifying means for specifying watched/listened predetermined information on the basis of watching/listening completed section information detected by the watching/listening completed section information detecting means and the predetermined information held by the holding means, and the transmitting means may further transmit through the network to the information supply device watched/listened predetermined information specified by the specifying means in addition to the watching/listening completed section information detected by the watching/listening completed section information detecting means.

There may be further equipped second reception means for receiving from the information supply device through the network reproduction data which define reproduction sections of a content and the order thereof and contain extraction information needed to extract predetermined information, and the extracting means may extract the predetermined information from the content received by the first reception means on the basis of the extraction information received by the second reception means.

There may be further equipped second reception means for receiving from the information supply device through the network a recording request signal for requesting recording of predetermined information, and the recording means may record the predetermined information received by the first reception means on the basis of the recording request signal received by the second reception means.

A second information processing method, a program for a third recording medium and a third program according to the present invention are characterized by comprising: a reception step of receiving a content containing predetermined information; an extracting step of extracting the predetermined information from the content received through the process of the reception step; and a recording step of recording the predetermined information extracted through the processing of the extracting step so that the predetermined information may be read out independently from the content.

A first information supply device of the present invention is characterized by comprising: first generating means for generating reproduction data which define reproduction sections of a content and the order thereof and contain extraction information needed to extract predetermined information contained in the content; and first transmitting means for transmitting the reproduction data generated by the first generating means to an information processing device through a network.

The predetermined information may be commercial information.

There may be further equipped second generating means for generating a recording request signal for requesting recording of the predetermined information contained in the content, and second transmitting means for transmitting the recording request signal generated by the second generating means through the network to the information processing device.

There may be further equipped second generating means for generating a selection signal to select one information from the predetermined information recorded in the information processing device, and second transmitting means for transmitting the selection signal generated by the second generating means through the network to the information processing device.

There may be further equipped reception means for receiving section information corresponding to the sections of the content recorded in the information processing device from the information processing device through the network, first holding means for holding the predetermined information, second holding means for holding information on the content, and search means for searching the predetermined information held in the information processing device on the basis of the predetermined information held in the first holding means, the information on the content held in the second holding means and the section information received by the reception means, and the second generating means may generate the selection signal on the basis of the search result of the search means.

When it is searched that the information processing device has no first predetermined information in the predetermined information, the search means may further search first-predetermined-information receptable time and broadcast channel on the basis of the information on the content held in the second holding means, and the first transmitting means may further transmit to the information processing device a request signal for requesting to receive and record the first predetermined information on the basis of the first-predetermined-information receptable time and broadcast channel searched by the search means.

There may be further equipped first achieving means for achieving from the information processing device through the network the watching/listening completed section information corresponding to a section in the content recorded in the information processing device, the section concerned being watched/listened to by a user, specifying means for specifying watching/listening completed predetermined information on the basis of the watching/listening completed section information achieved by the first achieving means and the predetermined information held by the first holding means, and third holding means for holding as user information for each user the watching/listening completed section information achieved by the achieving means and the watching/listening completed predetermined information specified by the specifying means.

There may be further equipped calculating means for calculating at least one of the number of content viewers and the audience rate every predetermined information, every content or every section on the basis of the watching/listening completed section information achieved by the first achieving means and the watching/listening completed predetermined information specified by the specifying means, and fourth holding means for holding the number of viewers or audience rate calculated by the calculating means.

The calculating means may further calculate charging information every predetermined information supplier on the basis of the information held in the fourth holding means.

The fourth holding means may further hold use conditions for right holders of contents, and the calculating means may further calculate counter values for the contents of the right holders on the basis of the use conditions and the watching/listening completed section information.

The calculating means may further calculate the counter values for the contents of the right holders on the basis of the viewer number or the audience rate.

There may be further equipped second achieving means for achieving user's taste information of the information processing device on the basis of the watching/listening completed section information achieved by the achieving means and the watching/listening completed predetermined information specified by the specifying means.

The first achieving means may further achieve the operation information corresponding to a user's operation on the watching/listening of a content from the information processing device through the network, and the specifying means may further specify the watching/listening completed predetermined information on the basis of the operation information achieved by the first achieving means.

There may be further equipped calculating means for calculating at least one of the number of content viewers and the audience rate every predetermined information, every content or every section on the basis the watching/listening completed section information achieved by the first achieving means and the watching/listening completed predetermined information specified by the specifying means, and fourth holding means for holding the viewer number or audience rate thus calculated by the calculating means.

There may be equipped reception means for receiving from the information processing device through the network the watching/listening completed section information corresponding to watching/listening completed sections in the sections of the content recorded in the information processing device and the watching/listening completed predetermined information of the predetermined information, and holding means for holding the watching/listening completed section information and the watching/listening completed predetermined information as user information of each user.

A first information supply method, a program for a fourth recording medium and a fourth program of the present invention are characterized by comprising: a generating step of generating reproduction data which define reproduction sections of a content and the order thereof and contain extraction information needed to extract predetermined information contained in the content; and a transmitting step of transmitting the reproduction data generated through the processing of the generating step to the information processing device through the network.

In the first information supply system according to the present invention, the information supply device distributes the reproduction data containing the prohibition information for prohibiting the skip of the predetermined information to the information processing device. When the skip of the predetermined information is instructed by a user, the information processing device prohibits the skip of the predetermined information irrespective of the user's instruction if the prohibition information is added.

In the first information supply device and method, recording medium and program of the present invention, when the predetermined information is contained in the content, the prohibition information for prohibiting the skip of the predetermined information is added to the reproduction data.

In the first information processing device and method, recording medium and program of the present invention, when the instruction of the skip of the content is detected, the skip of the content is controlled on the basis of the prohibition information of the reproduction data.

In the second information supply system of the present invention, the information supply device generates the reproduction data containing the extraction information for extracting the predetermined information contained in the content, and distributes the reproduction data to the information processing device. The information processing device extracts the predetermined information from the content received on the basis of the extraction information of the reproduction data, and stores the predetermined information so that the predetermined information can be read out independently from the content.

In the second information processing device and method, recording medium and program of the present invention, the predetermined information is extracted from the content and recorded so as to be readable out independently from the content.

In the second information supply device and method, recording medium and program of the present invention, the reproduction data containing the extraction information needed to extract the predetermined information contained in the content are generated, and transmitted to the information processing device.

### BRIEF DESCRIPTION OF THE DRAWINGS

Fig. 1 is a block diagram showing the construction of an information supply system to which the present invention is applied.
Fig. 2 is a block diagram showing the construction of a reception terminal of Fig. 1.
Fig 3 is a block diagram showing the construction of a service server of Fig. 1.
Fig. 4 is a flowchart showing the skip prohibiting flag setting processing of the service server of Fig. 1
Fig. 5 is a flowchart showing the reproduction processing of the reception terminal of Fig. 1.
Fig. 6 is a flowchart showing the details of the frontward skip processing of a step S35 of Fig. 5.
Fig. 7 is a diagram showing the processing of creating a CM data base.
Fig. 8 is a flowchart showing the processing of giving a CM mark to meta-data of the service server of Fig. 1.
Fig. 9 is a diagram showing an example of the meta-data registered in a meta-data data base.
Fig. 10 is a flowchart showing CM extraction processing in the reception terminal of Fig. 1.
Fig. 11 is a diagram showing content reproduction processing in the reception terminal of Fig. 1.
Fig. 12 is a flowchart showing program reproduction processing of the reception terminal of Fig. 1.
Fig. 13 is a flowchart showing the details of CM replacement processing in step S119 of Fig. 12.
Fig. 14 is a flowchart showing the details of CM selection processing in step S142 of Fig. 13.
Fig. 15 is a diagram showing use of CM recording instructing information.
Fig. 16 is a diagram showing an example of the CM recording instructing information.
Fig. 17 is a flowchart showing generating processing of the CM recording instructing information.
Fig. 18 is a flowchart showing the processing based on the CM recording instructing information.
Fig. 19 is a diagram showing the generating processing of the CM selection instructing information using taste information.
Fig. 20 is a flowchart showing the generating processing of the CM selection instructing information.
Fig. 21 is a diagram showing CM selection instructing information generating processing using section information.
Fig. 22 is a diagram showing the operation based on reserved recording instruction information of CM.
Fig. 23 is a flowchart showing CM selection instructing information creating processing.
Fig. 24 is a diagram showing the processing of registering watching/listening completed program section information.
Fig. 25 is a flowchart showing watching/listening completed CM specifying processing.
Fig. 26 is a diagram showing calculation processing of the number of viewers and the audience rate.
Fig. 27 is a flowchart showing charging processing.

### BEST MODE FOR CARRYING OUT THE INVENTION

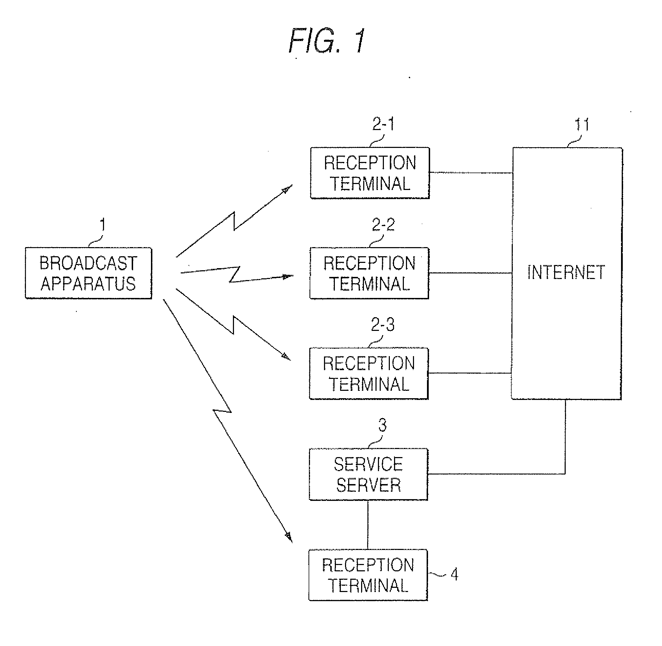

Fig. 1 shows the construction of an information supply system to which the present invention is applied. In the information supply system, a broadcasting device 1 broadcasts broadcast contents to reception terminals 2-1 to 2-3 (hereinafter, when it is unnecessary to discriminate these reception terminals 2-1 to 2-3 from one another, these reception terminals are merely referred to as reception terminal 2) to make the reception terminals 2 receive the broadcast contents. A reception terminal 4 provided in a service server 3 also receives the broadcast contents broadcasted by the broadcasting device 1.

The reception terminals 2-1 to 2-3 and a service server 3 are connected to the Internet 11.

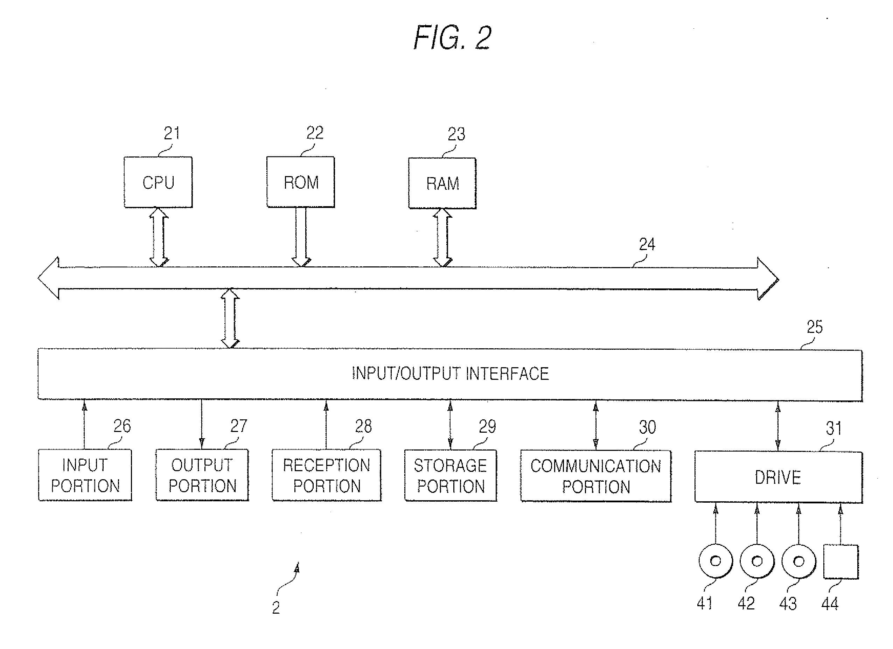

Fig. 2 shows the construction of the reception terminal 2. In Fig. 2, CPU (Central Processing Unit) 21 executes various kinds of processing according to programs stored in ROM (Read Only Memory) 22 or programs loaded from a storage portion 29 to RAM (Random Access Memory) 23. In RAM 23 are stored data needed for the execution of the various kinds of processing by CPU 21 at pleasure.

CPU 21, ROM 22 and RAM 23 are mutually connected to one another through a bus 24. An input/output interface 25 is also connected to the bus 24.

To the input/output interface 25 are connected an input portion 26 comprising a keyboard, a mouse, etc., a display comprising CRT, LCD or the like, an output portion 27 comprising a speaker or the like, a receiving portion 28 for receiving broadcast contents broadcasted from the broadcasting device 1, a storage portion 29 comprising a hard disc or the like and a communication portion 30 comprising a modem, a terminal adapter or the like. The communication portion 30 carries out communications processing through a network containing the Internet 11.

A drive 31 is also connected to the input/output interface 25 as occasion demands, and a magnetic disc 41, an optical disc 42, a magnetooptical disc 43, a semiconductor memory 44 or the like is loaded in the drive 31 at pleasure, and a computer program read out therefrom is installed into the storage portion 29 as occasion demands.

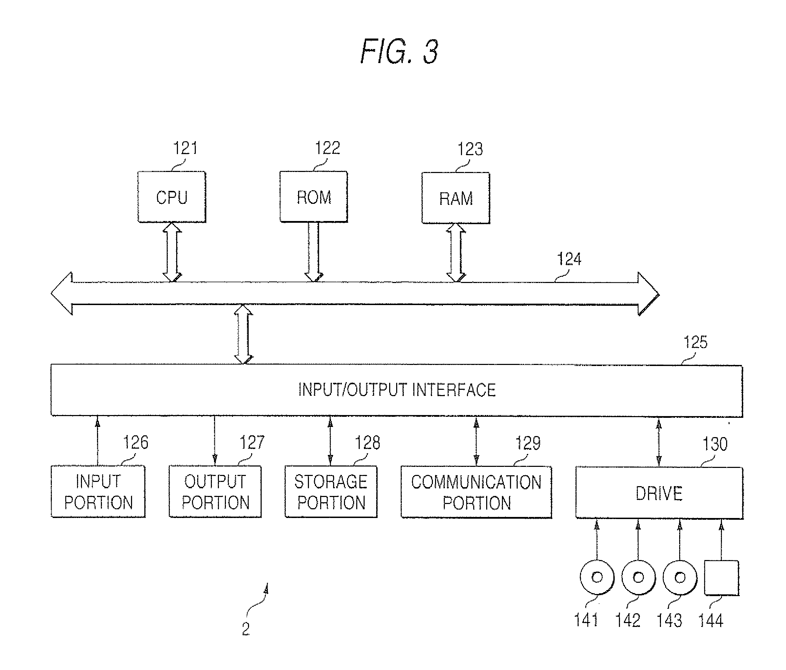

Fig. 3 shows an example of the construction of the service server 3. The elements from CPU 121 to an output portion 127 correspond to the elements from CPU 21 to the output portion 27 of Fig. 2, a storage portion 128 and a communication portion 129 correspond to the storage portion 29 and the communication portion 30 of Fig. 2, and a drive 130 and the elements from a magnetic disc 141 to a semiconductor 144 correspond to a drive 31 and the elements from the magnetic disc 41 to the semiconductor memory 44 of Fig. 2.

The elements from CPU 121 to the semiconductor memory 144 of the service server 3 in Fig. 3 execute the same function as the elements from CPU 21 to the semiconductor memory 44 corresponding to the title of the reception terminal 2 in Fig. 2, and the repetitive description thereof is omitted.

Next, the operation thereof will be described. The broadcasting device 1 broadcasts broadcast contents, and the reception terminal 2 and the reception terminal 4 receive the broadcast contents.

The reception terminal 2 supplies and stores the broadcast contents received by the reception portion 28 to and into the storage portion 29.

The reception terminal 4 basically has the same construction as the reception terminal 2 shown in Fig. 2, however, the broadcast contents received by the reception terminal 4 are supplied to the service server 3. When receiving the broadcast contents from the reception terminal 4 through the communication portion 129, the service server 3 supplies and stores the broadcast contents to and into the storage portion 128.

The service server 3 generates the meta-data corresponding to the broadcast contents stored in the storage portion 128. That is, if it is instructed from the operator of the service server 3 to generate meta-data through the input portion 126, CPU 121 reads out the broadcast contents stored in the storage portion 128, and outputs them to a display portion of the output portion 127. Watching this display, the operator operates the input portion 126 to perform edition processing. CPU 121 generates the meta-data corresponding to the edition processing, and supplies and stores them to and into the storage portion 128.

The meta-data are basically constructed by an index and a segment. When scan is instructed, the index defines a jump destination. After the jump is carried out, normal reproduction is carried out from the jump position.

The segment is defined by the reproduction start position and the reproduction end position of a content. When reproduction of a segment is instructed, the section between the reproduction start position and the reproduction end position is reproduced.

A story is constructed by any one or more number of segments. When reproduction of a story is instructed, the segments constituting the story are successively reproduced.

In addition to unique generation of meta-data by the service server 3, it may supply to the service server 3 meta-data which are generated by the broadcasting device 1 itself.

The service server 3 distribute through the Internet 11 to the reception terminal 2 the meta-data generated by itself or by the broadcasting device 1 as described above.

That is, CPU 21 of the service server 3 transmits the meta-data stored in the storage portion 128 from the communication portion 129 to the reception terminal 2 through the Internet when a request is made from the reception terminal 2 or at a prescribed timing.

When receiving meta-data transmitted from the service server 3 through the communication portion 30, CPU 21 of the reception terminal 2 supplies and stores the meta-data to and into the storage portion 29.

When the user of the reception terminal 2 operates the input portion 26 to instruct reproduction of the broadcast content using the meta-data, CPU 21 reads out the meta-data stored in the storage portion 29, and reads out the broadcast content stored in the storage portion 29 on the basis of the meta-data to reproduce the broadcast content. The broadcast content thus reproduced is output to the output portion 27 and displayed.

The broadcast content contains a commercial picture (pictures of a commercial film). The information supply system is equipped with various kinds of functions so that when a broadcast content is reproduced on the basis of meta-data (it is secondarily used), the commercial information contained in the broadcast content can be surely reproduced.

In the first embodiment, a skip prohibition flag for commercial information is added to meta-data to prohibit the commercial information from being skipped.

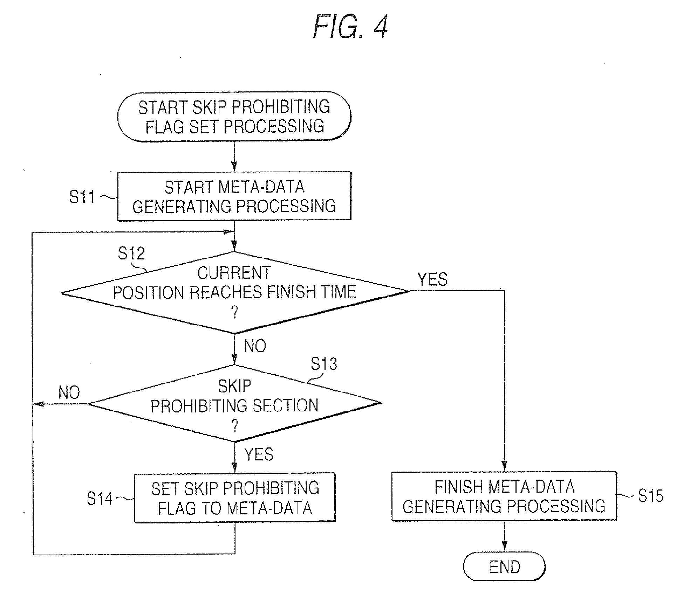

That is, when generating meta-data, the service server 3 executes the processing shown in the flowchart of Fig. 4.

First, in step S11, when it is instructed to generate meta-data upon operator's operation of the input portion 126, CPU 121 starts the processing of generating the meta-data corresponding to a broadcast content stored in the storage portion 128 on the basis of the instruction.

In step S12, it is judged by the CPU 121 whether the current position (reproduction position or recording position) of the broadcast content reaches an finish time. If the current position does not reach the finish time, CPU 121 goes to step S13 to judge whether the current position is in a step prohibited section, specifically whether it is in a commercial picture (CM) section. If it is not in the skip prohibited section, the processing returns to step S12, and the processing of the step S12 and the subsequent steps thereto is repeated.

If it is judged in step S13 that the current position is in the skip prohibited section (it is judged that the current position is in the commercial picture section), CPU 121 goes to step S14 to execute the processing of setting the skip prohibited section to meta-data. Thereafter, the processing returns to step S12, and the processing of the step S12 and the subsequent steps thereto is repetitively carried out.

Through execution of the repetitive processing, a skip prohibited flag is set at the position corresponding to the commercial picture of the broadcast content of the meta-data.

When it is judged in step S12 that the current position reaches the end position, CPU 121 goes to step S15 to finish the meta-data generation processing.

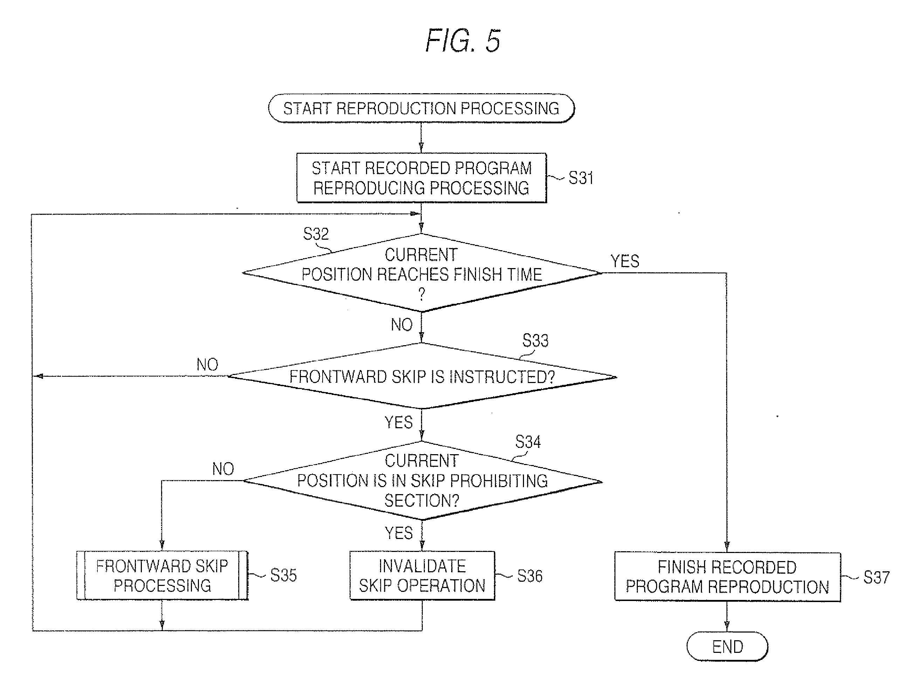

The meta-data thus generated are distributed to the reception terminal 2. The reception terminal 2 executes the reproduction processing shown in the flowchart of Fig. 5 on the basis of the meta-data.

In step S31, when a user instructs to start reproduction of a broadcast content (a program to be recorded) by operating the input portion 26, in step S 31, CPU 21 of the reception terminal 2 reads out the broadcast content stored in the storage portion 29 and supplies it to the output portion 27 to display it. That is, the reproduction processing is started.

In step S32 CPU 21 judges whether the current position reaches the finish time. If the current position does not reach the finish time, the processing goes to step S33, and upon user's operation of the input portion 26, CPU 21 judges whether a frontward skip is instructed or not. If it is judged that the frontward skip is not instructed, the processing returns to step S32 and the processing of the step S32 and the subsequent steps is repetitively carried out.

If it is judged in step S33 that the frontward skip is instructed, CPU 21 goes to step S34 to judge on the basis of the meta-data whether the current position (reproduction position) is in a skip prohibited section. If the current position is not in the skip prohibited section, the processing goes to step S35 to execute the frontward skip processing.

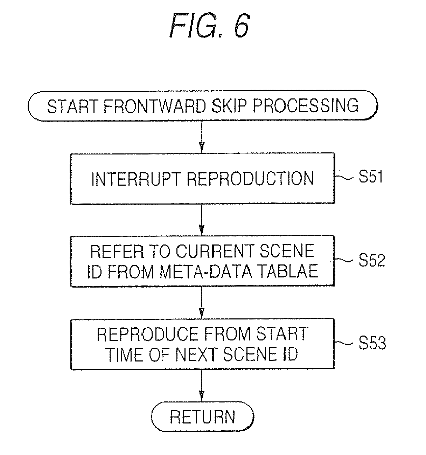

Fig. 6 shows the details of the frontward skip processing. In step S51, CPU 21 interrupts the reproduction under progress because the frontward skip is instructed. Thereafter, in step S52, CPU 21 reads out the scene ID of the current position (a scene being currently reproduced) from the meta-data. In step S53, CPU 21 achieves from the meta-data the next scene ID of the scene ID achieved in step S52 (the scene ID of a timely front scene), and starts the reproduction from the start time of the scene ID.

Accordingly, for example when the frontward skip is instructed in the course of the reproduction of the scene based on an N-th index, the reproduction point is jumped to the position defined by an (N+1)-th index, and the reproduction is resumed from that position.

After the processing of the step S35, the processing returns to step S32, and the processing of the step S32 and the subsequent steps thereto is repetitively carried out.

If it is judged in step S34 that the current position is in the skip prohibited section, CPU 21 goes to step S36 to execute the processing of invalidating the skip operation. That is, in this case, even when the user operates the input portion 26 to instruct the frontward skip, CPU 21 does not execute the corresponding processing. In other words, the skip operation is neglected.

Thereafter, the processing returns to step S32, and the processing of the step S32 and the subsequent steps thereto is repetitively carried out.

If it is judged in step S32 whether the current position (reproduction position) reaches the finish time, CPU 21 goes to step S37 to finish the reproduction processing of the broadcast content (the program to be recorded).

As described above, according to this embodiment, the skip prohibited flag is set to the meta-data, so that the commercial information is prevented from being skipped and the probability that the commercial information is watched/listened to can be enhanced.

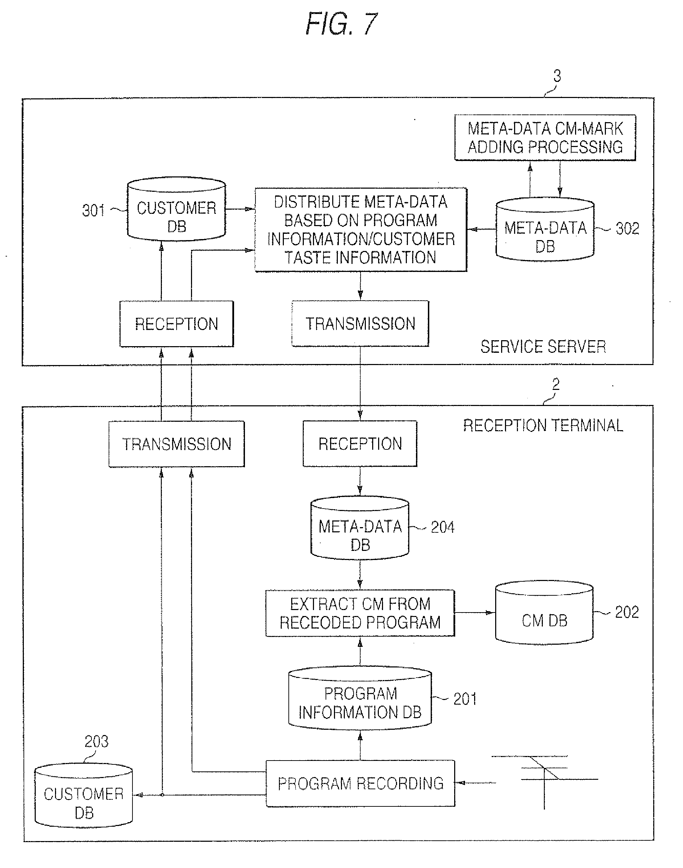

Fig. 7 shows the processing of a second embodiment. In this embodiment, the service server 3 has a customer data base (DB) 301 and a meta-data data base 302. These data bases are generated in the storage portion 128.

The meta-data are held in the meta-data data base 302. In the customer data base 301 are held taste information and user information such as the age, occupation, sexuality, etc. of the user of the reception terminal 2.

The user information and the taste information are transmitted from the communication portion 30 of the reception terminal 2 through the Internet 11 to the service server 3. When receiving these information through the communication portion 129, CPU 121 of the service server 3 supplies and stores these information to and into the customer data base 301 constituting the storage portion 128.

The reception terminal 2 has a program information data base 201, a CM data base 202, a customer data base 203 and a meta-data data base 204 in the storage portion 29. In the program information data base 201 are stored the broadcast content received from the reception portion 28, and program information such as the broadcast channel, broadcast station, title, broadcast time, etc. of the broadcast content.

The user's taste information generated on the basis of a program watched/listened to by the user of the reception terminal 2 is stored in the customer data base 203. The taste information may be determined on the basis of a predetermined function into which many parameters such as the watching/listening times of specific programs, the watching/listening times of all the programs, etc. are substituted.

Meta-data transmitted from the communication portion 129 of the service server 3 through the Internet 11 are supplied and stored through the communication portion 30 of the reception terminal 2 to and into the meta-data data base 204.

Commercial information extracted from a broadcast content is registered in the CM data base 202.

Next, the processing of registering CM information (commercial pictures) into the CM data base 202 of the reception terminal 2 will be described. The registration processing is carried out on the basis of meta-data registered in the meta-data data base 204. Therefore, it is necessary to generate the meta-data in the service server 3 in advance and then distribute it to the reception terminal 2.

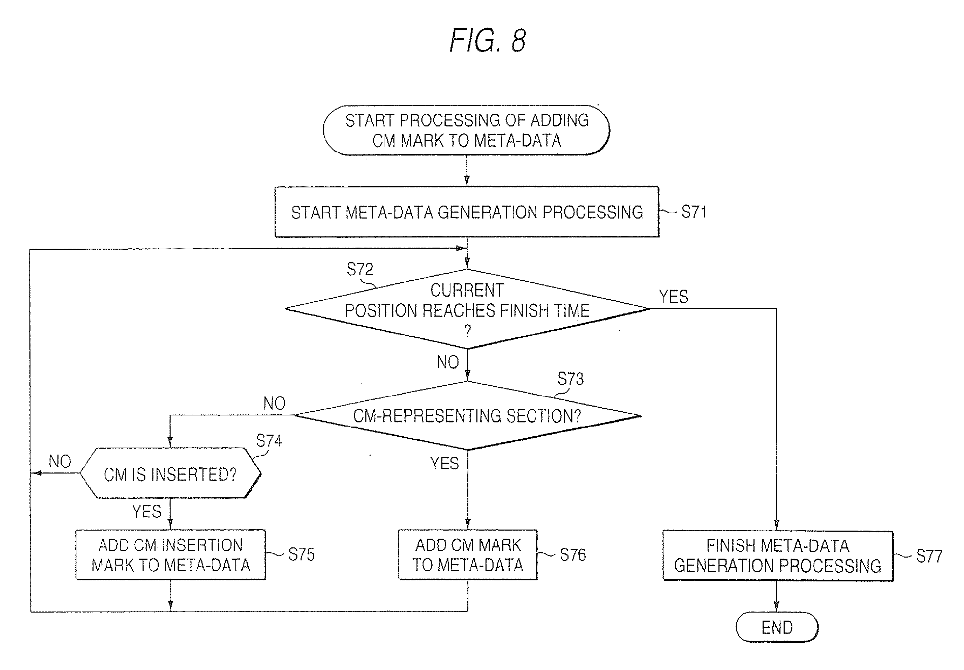

Therefore, the meta-data generating processing in the service server 3 will be first described with reference to the flowchart of Fig. 8.

When the meta-data generating processing is instructed from the operator on the basis of an input from the input portion 126, CPU 121 of the service server 3 starts the meta-data generating processing in step S71. At this time, CPU 121 reproduces a content stored in the storage portion 128, and outputs it to the output portion 127 to display it.

In step S72, CPU 121 judges whether the position at which the content is being reproduced at present (current position) reaches the finish time, and if the current position does not reach the finish time, the processing goes to step S73 to judge whether the broadcast content is in a section representing CM. This judgment may be performed on the basis of an operator's input from the input portion 126, or if a CM-inserted section is beforehand known on the basis of a reproduction position (time) for example, it could be judged whether the current position reaches the position (time) concerned.

If it is judged that the current position is in the CM representing section, CPU 121 goes to step S76 to execute the processing of giving a CM mark to the meta-data corresponding to the section concerned. Thereafter, the processing returns to step S72.

If it is judged in step S73 that the current position is not in the CM representing section, CPU 121 goes to step S74 to judge whether CM insertion is instructed through the input portion 126 by the operator. If the CM inserting instruction is made, CPU 121 goes to step S75 to execute the processing of giving a CM insertion mark to the meta-data. Thereafter, the processing returns to step S72. If it is also judged in step S74 that the CM insertion is not instructed, the processing returns to step S72.

As described above, the CM insertion mark is added to, for example, the head or last of the content, or to any position of some midpoint of the content.

The above processing is repetitively executed, and if it is judged in step S72 that the current position reaches the finish time, CPU 121 goes to step S77 to finish the meta-data generating processing.

As described above, the meta-data generated are registered in the meta-data data base 302. The meta-data registered are read out therefrom and transmitted from the communication portion 129 through the Internet 11 to the reception terminal 2.

Upon reception of the meta-data through the communication portion 30, CPU 21 of the reception terminal 2 registers the data into the meta-data data base 204 constituting the storage portion 29.

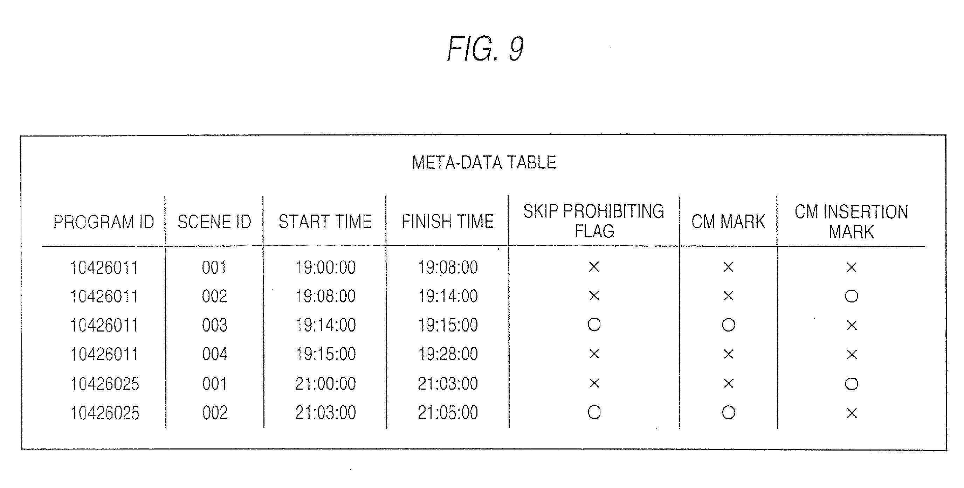

Fig. 9 shows an example of the meta-data thus generated and registered. For convenience of description, the meta-data are illustrated as a meta-data table in Fig. 9.

The program ID represents ID for identifying a broadcast content (program), and the scene ID represents ID for identifying the corresponding scene in plural scenes contained in the broadcast content. The start time and the finish time represent the start time and finish time of a scene identified by a scene ID, respectively.

The CM mark is a mark given in the processing of the step S76 of Fig. 8, and the CM insertion mark is a mark given in the processing of the step S75 of Fig. 8.

In the example of Fig. 9, a CM insertion mark is added to the scene in which the scene ID of a program ID "10426011" is equal to "002", the start time is equal to "19:08:00" and the finish time is equal to "19:14:00". Accordingly, when this scene is reproduced, CM is inserted.

Further, a CM mark is inserted in the scene in which the scene ID of a program ID "10426011" is equal to "003", the start time is equal to "19:14:00" and the finish time is equal to "19:15:00". Accordingly, when CM is replaced and inserted in this scene as described later.

In the example of Fig. 9, the skip prohibiting flag described with reference to Figs. 4 and 5 is set in the scene having the program ID of "10426011" and the scene ID of "003" and the scene having the program ID of "10426025" and the scene ID of "002".

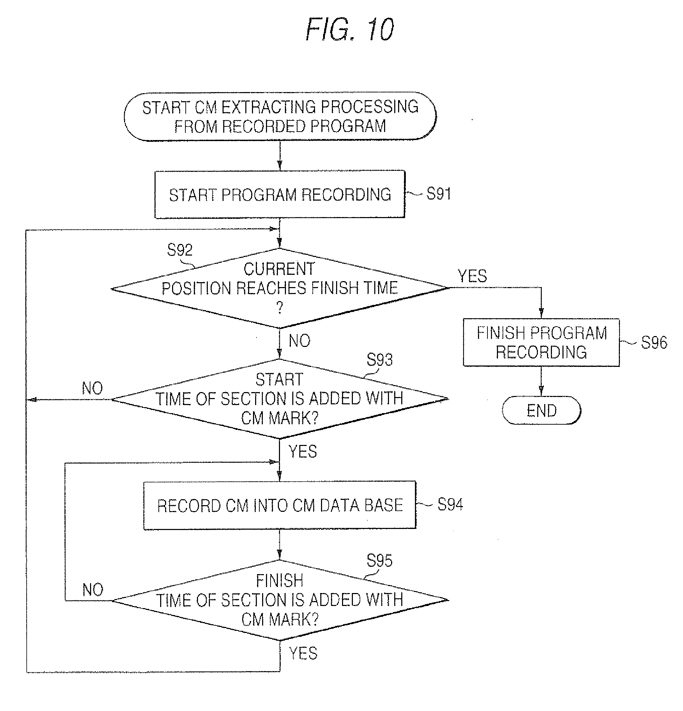

As described above, when the reception (recording) processing of the content is instructed in the reception terminal 2 under the state that the meta-data generated are registered in the meta-data data base 204, the CM extracting processing shown in the flowchart of Fig. 10 is executed.

That is, when reception (or recording) of a broadcast content is instructed from a user through the input portion 26, CPU 21 of the reception terminal 2 controls the reception portion 28 in step S91 to start the reception (or recording) processing. The reception portion 28 receives the broadcast content from the broadcasting device 1 and executes the processing of registering it into the program information data base 201 constituting the storage portion 29.

In step S92, CPU 21 judges whether the current position of the content reaches the finish time. If the current position does not reach the finish time, CPU 21 goes to step S93 to judge whether the current position reaches the start time in the section to which the CM mark is given. If it is judged that the current position does not reach the start time of the section to which the CM mark is given, CPU 21 returns to the step S92 to repetitively execute the processing of the step S92 and the subsequent steps thereto.

If it is judged in step S93 that the current position reaches the start time of the section having the CM mark, CPU 21 goes to step S94 to supply and register the currently-received content (CM) to and in the CM information data base 201.

Subsequently, CPU 21 goes to step S95 to judge whether the current position reaches the finish time of the section to which the CM mark is given. If the current position does not reach the finish time, CPU 21 returns to the step S94 to continue the processing of recording CM.

If it is judged in step S95 that the current position reaches the finish time of the section to which the CM mark is given, the registration processing on the CM data base 202 is finished, and CPU 21 returns to the step S92 to repetitively execute the processing of the step S92 and the subsequent steps thereto.

If it is judged in step S92 that the current position reaches the finish time of the content (program), CPU 21 goes to step S96 to finish the recording processing of the content (program).

As described above, CM contained in the content received (recorded) by the reception terminal 2 is registered independently of the content in the CM data base 202.

In the example of Fig. 9, CM contained in the scene in which the scene ID of the program ID "10426011" is equal to "003" and CM contained in the scene in which the scene ID of the program ID "10426025" is equal to "002" are registered in the CM data base 202.

In the above example, CM is registered in the data base different from that for the program (content). However, the CM data base 202 may be substantially integrated into the program information data base 201 by managing the position of CM so that only CM can be simply and quickly read out from the program information data base 201.

If the content reception processing is carried out in connection with the CM data base generation processing as described above, the user's taste based on the reception processing is identified, and the user's taste (customer taste information) is registered in the customer data base 203.

The taste may be generated on the basis of information such as the genre of contents, the features of scenes contained in the contents, etc.

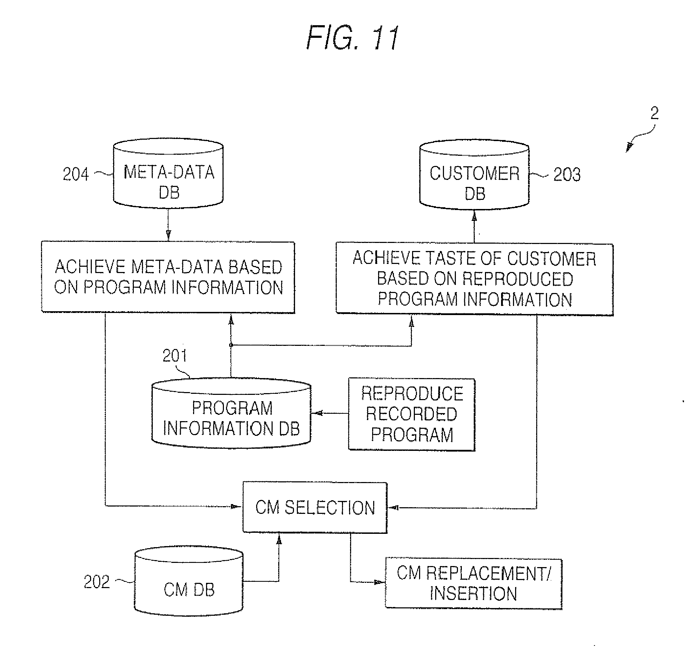

As described above, when reproduction of a program (content) registered in the program information data base 201 is instructed under the state that the CM data base 202 is generated in the reception terminal 2, the meta-data corresponding to the program (content) which is instructed to be reproduced are read out from the meta-data data base 204, and the CM replacement insertion processing is executed on the basis of the meta-data as shown in Fig. 11.

At this time, the user's taste is achieved on the basis of the program information reproduced from the program information data base 201, and it is supplied to and registered in the customer data base 203. The user's taste information which has been registered in the customer data base 203 until that time is used for the CM selection processing in the scene replacement insertion processing.

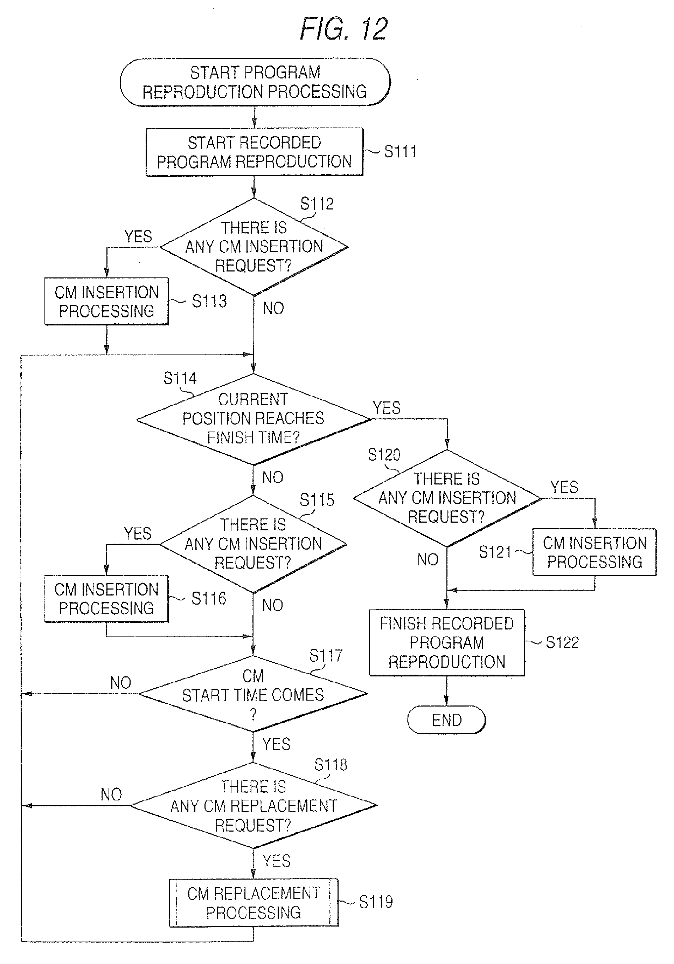

Next, the details of the program reproduction processing in the reception terminal 2 will be described with reference to the flowchart of Fig. 12.

When reproduction of a content (program) is instructed through the input portion 26 by the user, CPU 21 of the reception terminal 2 reads out the content indicated by the user from the contents registered in the program information data base 201 and outputs it to the output portion 27 in step S111, thereby starting the recorded program reproducing processing.

At this time, CPU 21 reads out the meta-data corresponding to the reproduction-instructed program from the meta-data data base 204, and executes the reproduction processing corresponding to the meta-data.

In step S112, CPU 21 judges on the basis of the meta-data thus read out whether a CM insertion request is made. The CM insertion request is inserted in the processing of the step S75 of Fig. 8 described above.

When the CM insertion request is made, CPU 21 goes to step S113 to execute the CM insertion processing. That is, CPU 21 reads out CM indicated by the meta-data from CMs registered in the CM data base 202, and outputs the CM to the output portion 27 to display it.

CM is inserted into the head of the content (before the reproduction of the content is substantially started) as described above. If it is judged in step S112 that CM insertion is not requested, the processing of the step S113 is skipped.

Subsequently, in step S114, CPU 21 judges whether the reproduction position (current position) of the content reaches the finish time. If the current position does not reach the finish position, CPU 21 goes to step S115 to judge it again whether CM insertion is requested or not. If the CM insertion is requested, CPU 21 goes to step S116 to read out CM from the CM data base 202 and outputs the CM to the output portion 27 to display it.

As described above, when CM insertion is requested at some midpoint of the broadcast content, CM is displayed at that position.

If it is judged in step S115 that no CM insertion is requested, the processing of the step S116 is skipped.

In step S117, CPU 21 then judges whether the current position reaches the CM start time (the time corresponding to the position at which a CM mark is given). If the current position does not reach the CM start time, CPU 21 returns to the step S114 to repetitively execute the processing of the step S114 and the subsequent steps thereto.

If it is judged in step S117 that the current position reaches the CM start time, CPU 21 goes to step S118 to judge whether a CM replacement request is made. As not shown, the CM replacement request is also added to the meta-data as occasion demands. Accordingly, CPU 21 executes this judgment on the basis of the meta-data.

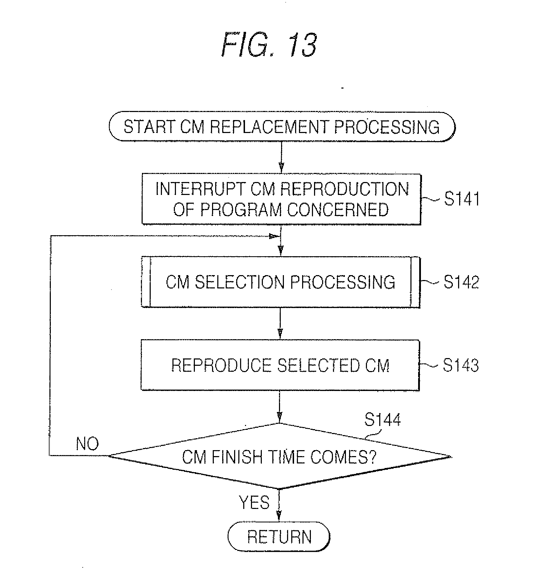

If no CM replacement request is made, CPU 21 returns to the step S114 to repetitively execute the processing of the step S114 and the subsequent steps thereto. On the other hand, if the CM replacement request is made, CPU 21 goes from step S118 to step S119 to execute the CM replacement processing. The details of the CM replacement processing are shown in Fig. 13.

When the CM replacement processing is executed, reproduction of CMs of a program (content) which is being currently reproduced is interrupted in step S141, and CM selection processing is executed in step S142 by CPU 21.

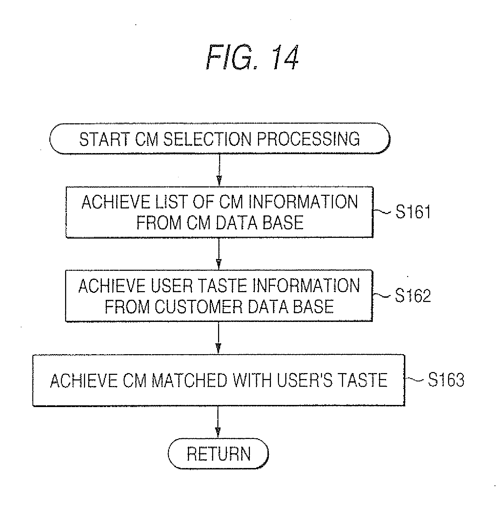

The details of the CM selection processing are shown in the flowchart of Fig. 14.

That is, in step S161 CPU 21 achieves a list of CM information from the CM data base 202. Furthermore, in step S162 CPU 21 achieves the taste information of the user from the customer data base 203. In step S163, CPU 21 selects and achieves from the list of the CM information achieved through the processing of the step S161 CMs which are matched with the user's taste achieved through the processing of the step S162.

When the CMs matched with the user's taste are selected in such a way as described above, CPU 21 goes to step S143 to read out the selected CMs from the CM data base 202 and output them to the output portion 27 to display them, whereby the CMs matched with the user's taste are reproduced in place of the CMs contained in the broadcast content.

In step S144, CPU 21 judges whether the current position reaches the CM finish time. If it does not reach the CM finish time, CPU 21 returns to the step S142 to repetitively execute the processing of the step S142 and the subsequent steps thereto.

If it is judged in step S144 that the current position reaches the CM finish time, the CM replacement processing is finished and CPU 21 returns to the step S114 of Fig. 12 to repetitively execute the processing of the step S114 and the subsequent steps thereto.

If it is judged in step S114 that the current position reaches the finish time, in step S120 CPU 21 judges on the basis of the read-out meta-data whether a CM insertion request is made. This CM insertion request is inserted through the processing of the step S75 of Fig. 8 described above.

When the CM insertion request is made, CPU 21 goes to step S121 to execute the CM insertion processing. That is, CPU 21 reads out the CMs indicated by the meta-data from the CMs registered in the CM data base 202, and outputs the CMs to the output portion 27 to display them.

As describe above, the CMs are inserted at the last of the content (after the reproduction of the content is substantially finished). If it is judged in step S120 that no CM insertion request is made, the processing of the step S121 is skipped.

Thereafter, in step S112 the reproduction processing of the content (program) is finished.

As described above, when the CM replacement is instructed, the CMs indicated on the basis of the meta-data are replaced by the CMs which are originally inserted in the broadcast content, and reproduced.

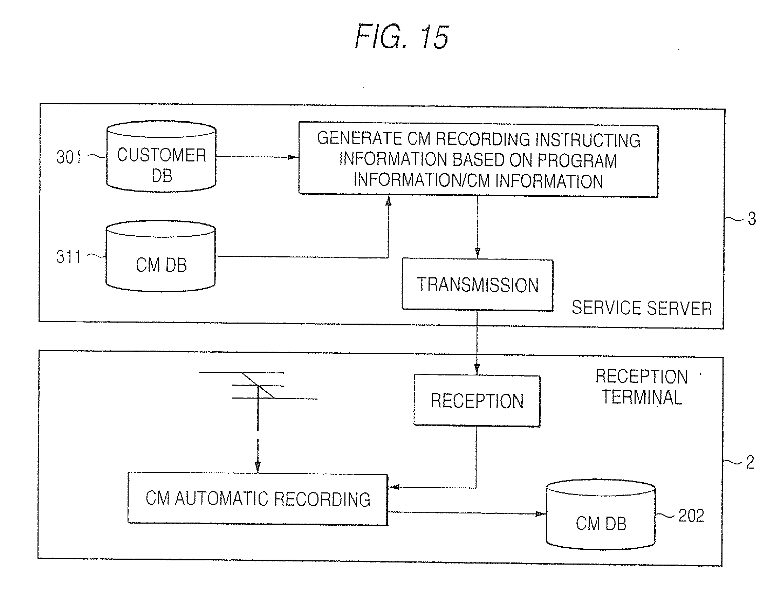

In the foregoing description, CMs contained in a broadcast content are extracted and then registered in the CM data base 202. However, plural CMs are continuously broadcasted from the broadcasting device 1 by using a part or the whole of a broadcast channel, and received at the reception terminal 2 to register them into the CM data base 202. Fig. 15 shows the construction in this case.

That is, in this embodiment, a CM data base 311 is prepared in the service server 3, and CM information is registered in the CM data base 311 in advance. CPU 121 of the service server 3 generates CM recording instructing information on the basis of customer information registered in the customer data base 301 and CM information registered in the CM data base 311, and transmits these information as meta-data from the communication portion 129 through the Internet 11 to the reception terminal 2.

Upon receiving the meta-data through the communication portion 30, CPU 21 of the reception terminal 2 registers the meta-data into the meta-data data base 204.

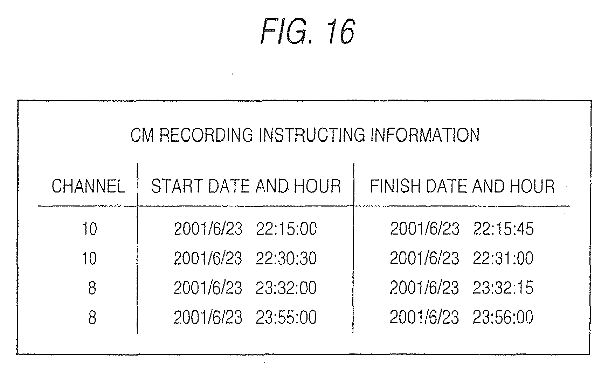

Fig. 16 shows an example of CM recording instructing information contained in the meta-data distributed from the service server 3 as described above. In this example, CM for which the channel is set to "10", the start date and hour is to "22:15:10 on 23rd of June, 2001" and the finish date and hour is set to "22:15:45 on 23rd of June, 2001" is indicated as a recording target. Furthermore, CM for which the start date and hour of the same channel is set to "22:30:30 of 23rd of June, 2001" and the finish date of the same channel is set to "22:31:00 of 23rd of June, 2001" is also indicated as a recording target.

If such meta-data are registered in the meta-data data base 200, CPU 21 of the reception terminal 2, CPU 21 of the reception terminal 2 controls the reception portion 28 on the basis of the meta-data to make the reception portion 28 receive the channel when the broadcast time of CM specified in the CM recording instructing information comes, and registers the CM data thus received into the CM data base 202.

Accordingly, in this example, even when the user does not instruct to watch/listen to the content, the CM data base 202 is automatically generated.

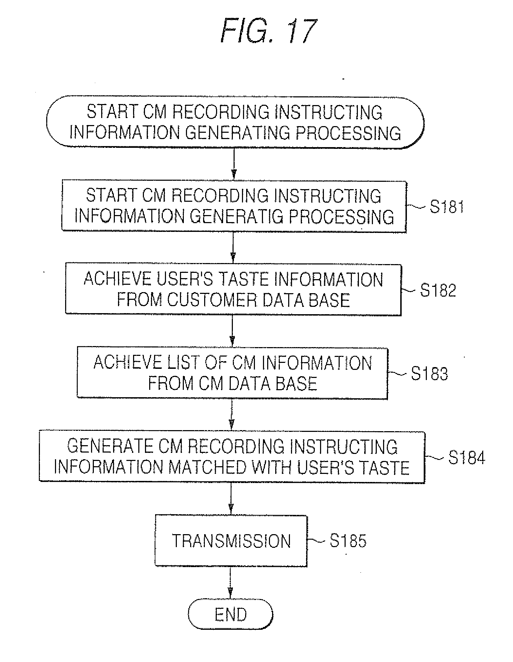

Fig. 17 shows the processing when the CM recording instructing information as described above is generated in the service server 3. when in step S181 CPU 121 starts the processing of generating the CM recording instructing information, in step S182 CPU 121 achieves the taste information of the user from the customer data base 203. Furthermore, in step S183 CPU 121 achieves a list of CM information from the CM data base 202.

In step S184, CPU 121 selects CMs matched with the user's taste achieved through the processing of the step S182 from the list of the CM information achieved through the processing of the step S183, and generates CM recording instructing information as shown in Fig. 16. The CM recording instructing information thus generated is transmitted as meta-data from the communication portion 129 through the Internet 11 to the reception terminal 2 in step S185.

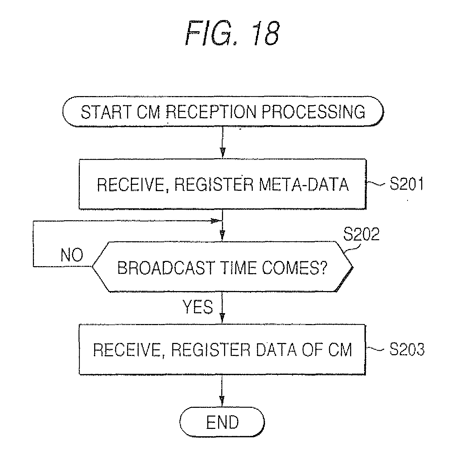

The processing of the reception terminal 2, which is the reception side for the CM recording instructing information thus transmitted, will be described with reference to the flowchart of Fig. 18. In step S201, the reception terminal 2 receives the meta-data. The meta-data thus received are registered in the meta-data data base 200.

If such meta-data are registered in the meta-data data base 200, CPU 21 of the reception terminal 2 judges in step S202 whether the broadcast time for CMs specified by the CM recording instructing information comes on the basis of the meta-data. The processing of the step S202 is repeated until it judged that it is the broadcast time for the CMs specified by the CM recording instructing information in step S202. That is, the standby state is kept, and CPU 21 goes to step S203 when it is judged that it is the broadcast time for the CMs specified by the CM recording instructing information.

In step S203, CPU 21 controls the reception portion 28 to receive the channel, and registers the data of the CMs thus received into the CM data base 202. As described above, the CM data registered in the CM data base 202 of the reception terminal 2 are renewed.

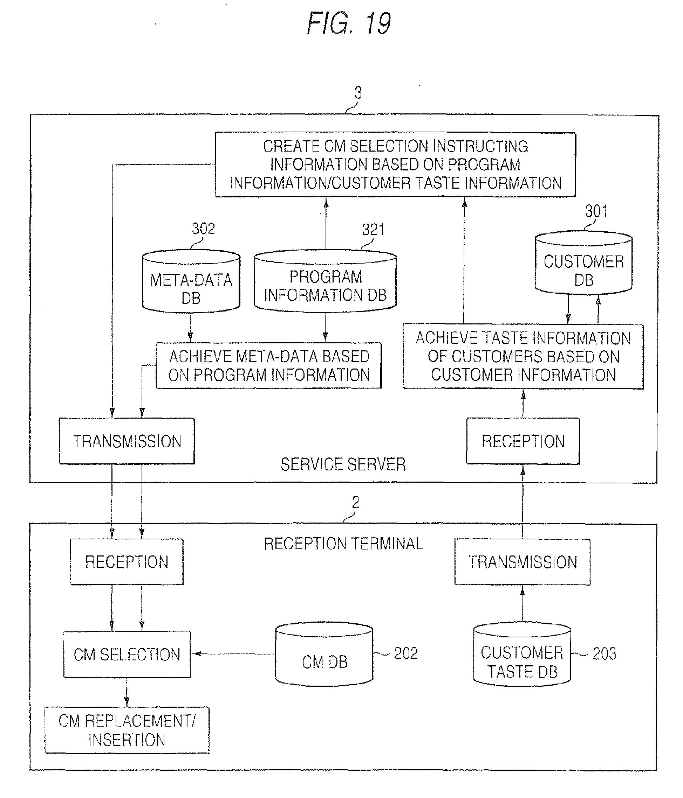

In the example of Fig. 14, the CMs corresponding to the user's taste are selected on the basis of the user's taste information. Furthermore, CMs may be selected every program. Fig. 19 shows the processing in this case.

That is, in the example of Fig. 19, the user's taste information registered in the customer's taste data base 203 is transmitted from the communication portion 30 through the Internet 11 to the service server 3.

When receiving the taste information through the communication portion 129, CPU 121 of the service server 3 supplies and registers the taste information to and in the customer data base 301.

The service server 3 is equipped with a program information data base 321, and various kinds of information concerning contents (programs) broadcasted from the broadcasting device 1 are registered in the program information data base 321. CPU 121 generates CM selection instructing information on the basis of both the user's taste information registered in the customer data base 301 and the program information registered in the program information data base 321. That is, in this example, it is determined every content (program) which CM should be selected for the user concerned on the basis of both the content and the user's taste.

CPU 121 of the service server 3 achieves the meta-data corresponding to the target program (content) from the meta-data data base 302, adds the meta-data with the CM selection instructing information and transmits the data from the communication portion 129 through the Internee 11 to the reception terminal 2.

When receiving the meta-data through the communication portion 30 at the reception terminal 2, CPU 21 supplies and registers the meta-data thus received to and in the meta-data data base 204.

When the content (program) reproduction processing is started, CPU 21 executes the processing as shown in the flowchart of Fig. 12. CMs which are matched with the user's taste and the program are selected (step S162 of Fig. 14) and the replacement insertion processing is executed in the CM selection processing of the step S142 in the processing of Fig. 13 which constitutes the CM replacement processing in step S119.

Accordingly, more suitable CMs can be shown every user and every content (program). As a result, the advertisement effect of CMs can be more enhanced.

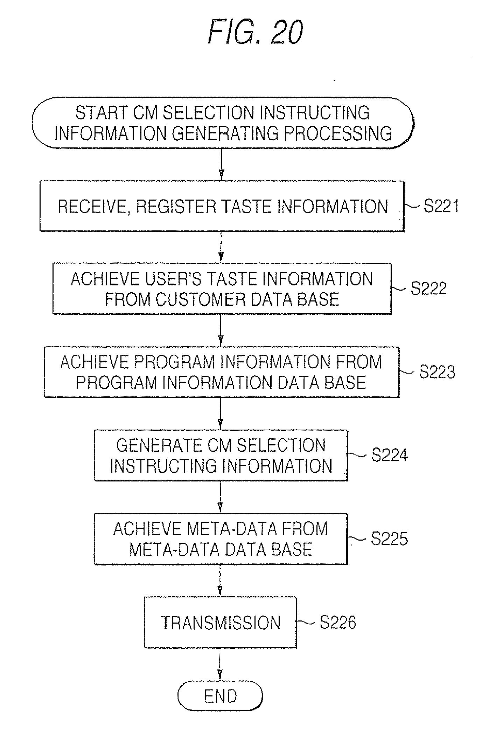

Fig. 20 shows the processing of generating the CM selection instructing information as described above in the service server 3. When receiving the taste information through the communication portion 129, CPU 121 of the service server 3 supplies and registers the taste information thus received to and into the customer data base 301 in step S221.

In step S222, when the CM selection instructing information is generated, CPU 121 achieves the user's taste information registered in the customer data base 301. Furthermore, in step S223, CPU 121 achieves from the program information data base 321 the various kinds of information concerning the contents (programs) broadcasted by the broadcasting device 1.

CPU 121, in step S224, generates the CM selection instructing information on the basis of both the user's taste information achieved from the customer data base 301 and the program information achieved from the program information data base 321. That is, in this example, it is determined on the basis of both the content concerned and the user's taste every content (program) which CM should be selected for the user.

In step S225, CPU 121 of the service server 3 achieves the meta-data corresponding to the target program (content) from the meta-data data base 302 on the basis of the CM selection instructing information thus generated. Thereafter, in step S226, the meta-data thus achieved are added with the CM selection instructing information, and then transmitted from the communication portion 129 through the Internet 11 to the reception terminal 2.

The operation of the reception terminal 2 which receives the meta-data and the CM selection instructing information as described above will be described. The description on the details of the operation is omitted because it is substantially the same as the operation described with reference to the flowcharts shown in Figs. 12 and 13, and only the differences will be described.

When receiving the meta-data through the communication portion 30 at the reception terminal 2, CPU 21 supplies and registers the meta-data to and into the meta-data data base 204. When the reproduction processing of the content (program) is started, CPU 21 executes the processing as shown in the flowchart of Fig. 12. In the CM selection processing of the step S142 in the processing of Fig. 13 which constitutes the CM replacement processing in step S119, CPU 21 selects CMs which are matched with the user's taste and the program (step S162 of Fig. 14), and executes the replacement insertion processing.

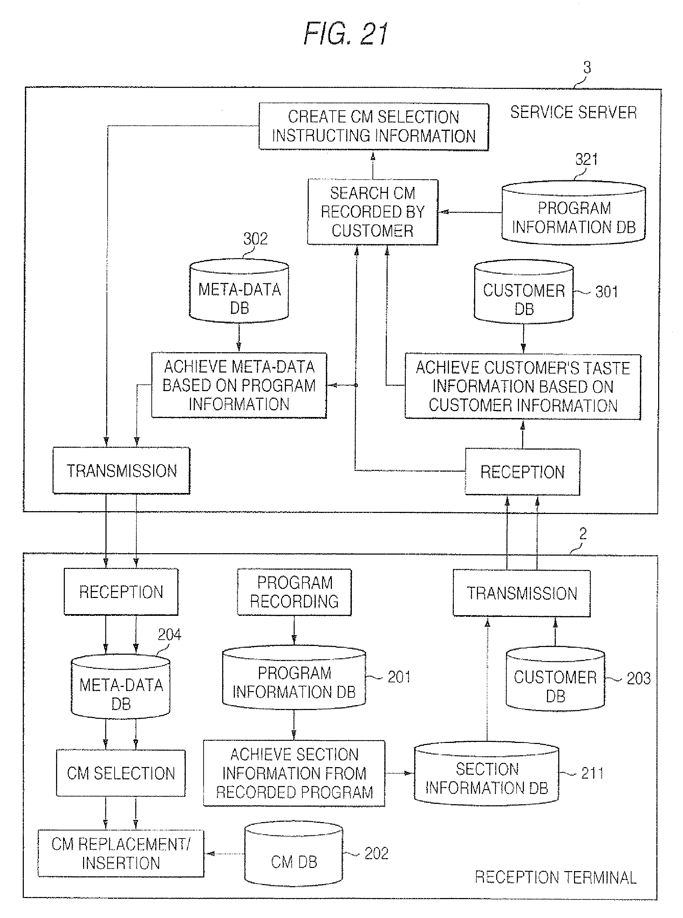

It is impossible to replace and insert CMs which are not registered in the CM data base 202 of the reception terminal 2. Therefore, by checking the CMs registered in the CM data base 202 and selecting prescribed CMs from the actually-registered CMs, it is possible to make the users surely watch/listen to the CMs. Fig. 21 shows an example in this case.

That is, in this example, when a user records a prescribed program (content), the content is registered in the program information data base 201. CPU 21 achieves the section information contained in the content registered in the program information data base 201. This section information contains information representing the section of each scene of the content. The section information contains information on a broadcast channel and a broadcast time, for example. Accordingly, on the basis of the section information, it can be identified what content is registered in the program information data base 201. The registration of the content in the program information data base 201 means that the CM portion contained in the content is separated from the content and registered in the CM data base 202 in the manner as described above. Accordingly, The registration of the prescribed section information in the section information data base 211 means that the CM corresponding to the section is registered in the CM data base 202.

The section information registered in the section information data base 211 is transmitted from the communication portion 30 through the Internet 11 to the service server 3 together with customer information registered in the customer data base 203.

When receiving the section information and the customer information through the communication portion 129, CPU 121 of the service server 3 registers them into the customer data base 301.

As described above, the information representing which section contents are received and registered by each user is registered in the customer data base 301.

Further, the taste information of each user is also registered in the customer data base 301.

In consideration of the user's taste information, CPU 121 of the service server 3 searches and selects, on the basis of section information, CMs which are matched with the user's taste and registered in the CM data base 202 by the user. As described above, a predetermined one of the CMs which are matched with the taste of each user and actually registered in the CM data base 220 is selected, and indicated as CM selection instructing information.

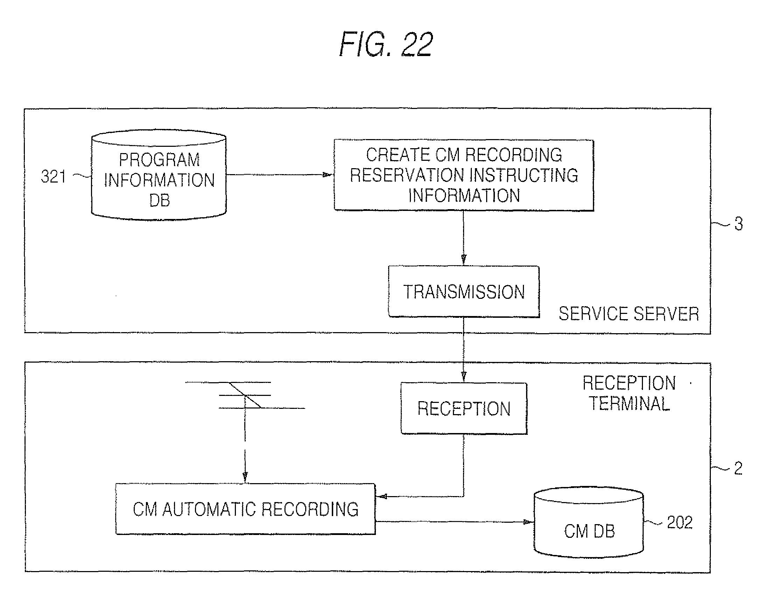

As a result of the judgement based on the user's taste, when any CM matched with the user is not registered in the CM data base 202, another CM may be selected. However, for example, it is also possible to create recording instructing information for instructing to record CM judged as being most suitable for the user into the reception terminal 2 of a user, and transmitting the recording instructing information to the reception terminal 2 so that the reception terminal 2 receives and records the CM concerned and further registers it into the CM data base 202 as shown in Fig. 22.

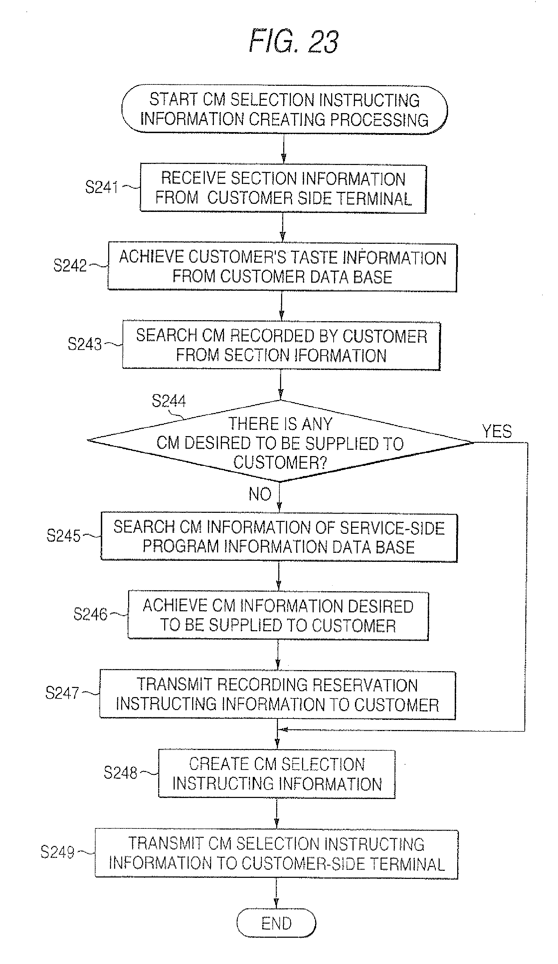

Fig. 23 shows the processing of creating the CM selection instructing information as described above in the service server 3. In step S241, CPU 121 of the service server 3 receives through the communication portion 129 the section information which is read out from the section information data base 211 of the reception terminal 2 and transmitted. In step S242, CPU 121 receives through the communication portion 129 the user's taste information which is read out from the customer data base 203 of the reception terminal 2 and transmitted. These information is registered in the customer data base 301.

In step S243, on the basis of the section information received in step S241, CPU 121 searches CMs recorded by the user from the program information registered in the program information data base 321.

In step S244, as a search result of the step S243, CPU 121 judges whether there is any CM to be watched/listened to by the user (judges whether there is any CM which is matched with the taste of the user). If there is no CM, the CPU 121 goes to step S245 to search CM information registered in the program information data base 321, and search a more suitable CM on the basis of the taste of the user. In step S246, CPU 121 achieves the CM information achieved through the search of the step S245 from the program information data base 321. In step S247, CPU 121 creates recording-reservation instructing information for making the user receive and record the CM information achieved in step S246, and transmits it from the communication portion 129 through the Internet 11 to the reception terminal 2. The recording-reserving instructing information contains information for indicating a broadcast station (broadcast channel) and information for indicating a broadcast time (reception time).

When receiving the recording-reserving instructing information through the communication portion 30, CPU 21 of the reception terminal 2 temporarily stores it into the meta-data data base 204. CPU 21 controls the reception portion 28 on the basis of the recording-reserving instructing information to receive the CM when the broadcast time of the CM concerned comes. The CM received by the reception portion 28 is supplied and registered to and into the CM data base 202.

As described above, the service server 3 can actually register the CM which is most matched with the user's taste when the CM is not registered by the user.

If it is judged in step S244 that there is not searched any CM which is desired to be watched by the user, the processing from the step S245 to the step S247 is skipped. In this case, a prescribed CM is selected from the CMs registered in the CM data base 202.

Next, CPU 121 of the service server 3 goes to step S248 to create the CM selection instructing information for selecting the CM searched, and transmits the CM selection instructing information to the reception terminal 2 in step S249.

This CM selection instructing information is registered in the meta-data data base 204 of the reception terminal 2.

Accordingly, as described above, when reproduction of a content registered in the program information data base 201 is instructed, on the basis of the meta-data registered in the meta-data data base 204, CPU 21 of the reception terminal 2 reads out the CM indicated on the basis of the CM selection instructing information from the CM data base 202, and executes the replacement and insertion processing.

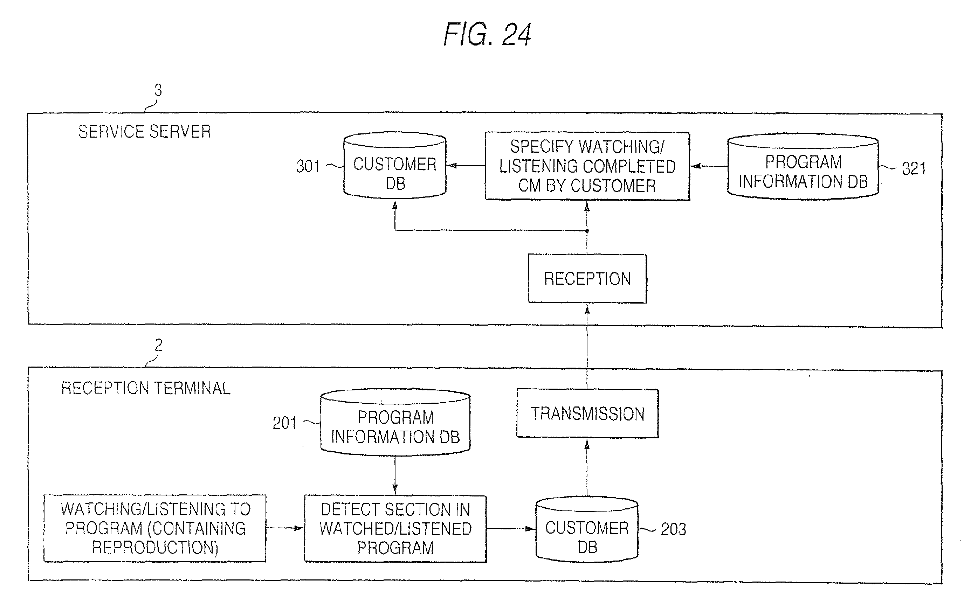

The service server 3 can perform statistical processing such as the audience rate, the number of viewers, etc. for contents by achieving various kinds of information from the reception terminal 2. Therefore, for example, CMs which each user actually watches/listens to can be registered as shown in Fig. 24.

That is, in the example of Fig. 24, when watching/listening of a prescribed broadcast content is instructed or reproduction of a content which has been stored in the storage portion 29 is instructed by user's inputting the input portion 26, CPU 21 of the reception terminal 2 detects the section information of the content on the basis of the information registered in the program information data base 201. In the same manner as described above, the section information contains a broadcast channel and date-and-hour information. The section information is temporarily registered in the customer data base 203.

CPU 21 reads out watching/listening completed program section information registered in the customer data base 203 at a prescribed timing, and transmits it from the communication portion 30 through the Internet 11 to the service server 3.

When achieving the watching/listening completed program section information through the communication portion 129, CPU 121 of the service server 3 supplies and registers to and into the customer data base 301. CPU 121 refers to the CM information registered in the program information data base 321 to specify CMs (watching/listening completed CMs) watched/listened by each user on the basis of the watching/listening completed section information of each user transmitted from the reception terminal 2. The watching/listening completed CMs thus specified are registered in the customer data base 301 every user.

As described above, what CMs have been watched/listened to by each user is registered in the customer data base 301.

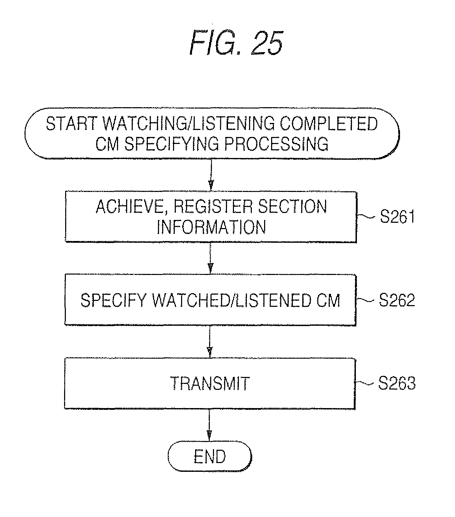

The processing as described above will be described with reference to the flowchart of Fig. 25 again. In step S261, CPU 121 of the service server 3 achieves the watching/listening completed program section information from the reception terminal 2 through the communication portion 129. The watching/listening completed program section information thus achieved is supplied and registered to and into the customer data base 301.

In step S262, CPU 121 refers to the CM information registered in the program information data base 321 to specify CMs watched/listened by each user (watching/listening completed CMs) from the watching/listening completed section information of each user transmitted from the reception terminal 2. In step S263, the watching/listening completed CMs thus specified are registered in the customer data base 301 every user.

In the foregoing description, the watching/listening completed CMs are specified on the basis of the section information. However, for example, it is also possible to detect the user's operation of the input portion 26 and specify the watching/listening completed CMs on the basis of this operation.

In this case, CPU 21 of the reception terminal 2 temporarily stores the operation information of the input portion 26 in the storage portion 29. At a prescribed timing, CPU 21 transmits the operation information from the communication portion 30 through the Internet 11 to the service server 3.

CPU 121 of the service server 3 registers the operation information from the reception terminal 2 into the customer data base 301, and also refers to the program information registered in the program information data base 321 on the basis of the operation information to specify which CM is watched/listened to by the user. For example, it can be assumed that the user watches/listens to a broadcasted content at the timing at which the operation is detected.

In the example of Fig. 24, the watching/listening completed CMs are specified in the service server 3. However, they may be specified at the reception terminal 2.

In this case, when a prescribed content is received by the reception portion 28 or a content which has been already stored in the storage portion 29 is reproduced, CPU 21 of the reception terminal 2 achieves the section information of the content. CPU 21 registers the section information as watching/listening completed section information into the customer data base 203.

In the same manner as described above, CM information is extracted and registered into the CM data base 202 of the reception terminal 2. The CM information contains such information as recorded on the basis of recording-reservation instructing information from the service server 3.

CPU 21 specifies the watched/listened CMs on the basis of the watching/listening completed section information registered in the customer data base 203 and the program information of the program information data base 201. CPU 21 registers the used CMs thus specified into the customer data base 203, and also transmits the watching/listening completed section information from the communication portion 30 through the Internet 11 at a prescribed timing.

CPU 121 of the service server 3 registers into the customer data base 301 the watching/listening completed CM information and watching/listening completed program information of each user which are transmitted from each reception terminal 2.

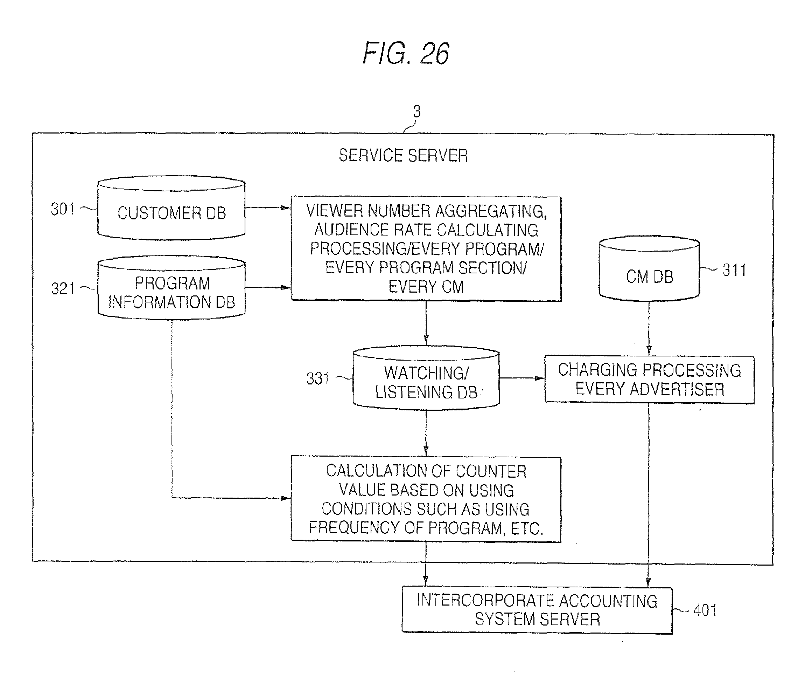

When the watched/listened CM and the watching/listening completed section information of each user are registered in the customer data base 301 as described above, CPU 121 of the service server 3 carries out the aggregative processing on the watched/listened CMs which are registered every user in the customer data base 301, thereby calculating the number of viewers and the audience rate every CM as shown in Fig. 26, for example. Furthermore, CPU 121 carries out the aggregative processing on the watching/listening completed program section information of each user registered in the customer data base 301 to calculate the number of viewers and the audience rate every program or every program section.

As described above, the aggregation result thus calculated is registered in the watching/listening data base 331.

The watching/listening data base 331 may be integrated with the customer data base 301. However, if they are separately provided, the number of viewers and the audience rate every CM, every program and every program section are managed separately from the personal information of each user, so that the privacy of each user can be protected.

It can be estimated that the information on the number of viewers every CM represents the contribution effect of the program viewer/listener service system (information supply system) of this invention to CM exposure. Therefore, CPU 121 executes the charging corresponding to the number of viewers every CM to the advertiser of the CM. Therefore, in the CM data base 311 are registered information on the advertiser of each CM (sponsor information), the bank account thereof (billing address), etc. CPU 121 calculates a unit price of CM exposure per viewer/listener, determines the money to be charged on the basis of the unit price, transmits a bill for the charging money to an intercorporate accounting system server 401 to request the account settlement.

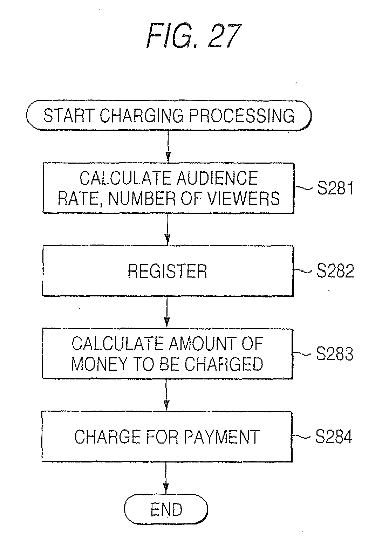

The charging processing will be described again with reference to the flowchart of Fig. 27. In step S281, CPU 121 of the service server 3 carries out the aggregative processing on the watched/listened CMs of each user which are registered in the customer data base 301, thereby calculating the number of viewers and the audience rate every CM. Furthermore, CPU 121 carries out the aggregative processing on the watching/listening completed program section information of each user which are registered in the customer data base 301, thereby calculating the number of viewers and the audience rate every program or every program section.

As described above, the aggregation result thus calculated is registered in the watching/listening data base 331 in step S282.

In step S283, CPU 121 calculates the CM exposure unit price per viewer, and the amount of money to be charged is determined on the basis of the unit price. Then, in step S284, CPU 121 transmits the payment of the amount of money thus determined to the intercorporate accounting system server 401 to request the account settlement.

The charging processing will be further described. The number of viewers and the audience rate every program or every program section, which are registered in the watching/listening data base 331, represent the actual performance of the program watching/listening service system (information supply system) of the present invention to enhance the audience rate of each program when original CM contained in a program is directly reproduced without performing the CM replacement insertion processing when the program is broadcasted. Therefore, the conditions under which the counter values for enhancement in audience rate is charged to the broadcaster managing the broadcasting device 1 or program suppliers may be registered in the program information data base 321 in advance to carry out the charging processing on the broadcaster and the program suppliers on the basis of these conditions.

Furthermore, the number of viewers and the audience rate every program or every program section represent the actual performance of use of programs in the program watching/listening service system (information supply system) of the present invention when the CM replacement insertion processing is carried out. In this case, the counter values for use of programs are set every broadcaster or every program proprietor in advance, and the conditions (program use conditions) are registered in the program information data base 321 in advance. CPU 121 calculates the counter value for the program use on the basis of the use conditions, and carries out the payment processing on the broadcaster or the program proprietors.

Further, it is also possible to beforehand register the features of viewers/listeners which are supposed every program (program-based viewer's taste) in the program information data base 321, compare the features thus registered with the watched/listened CMs of each user accumulated in the customer data base 301 and the watching/listening completed program section information to specify the taste of each user who watched/listened to specific programs or sections, and then register the taste thus specified as taste information of the user in the customer data base 301.

Besides, the trend of viewers can be grasped on the basis of the number of viewers or the audience rate every program or CM accumulated in the watching/listening data base 331 or they can be used as data for marketing such as broadcast program planning, CM production planning, advertisement strategy, etc.

By replacing an original CM inserted at the broadcast time of a program with another CM, the program can be used as an advertisement medium for advertisers other than the advertiser of the original CM, and the advertisement income can be increased.

Furthermore, by enabling the service server 3 to control selection of CMs to be replaced/inserted, CM supply based on the advertisement strategies of advertisers can be performed. Further, it is also possible that the taste information of a user is extracted and held from the watching/listening record of the user, and CMs to be replaced/inserted are selected on the basis of the taste of the user at the reception terminal 2 or service server 3 to thereby enable CMs to be supplied in conformity with the taste of the user. Accordingly, the probability that the CMs are skipped by the user can be reduced, and it is unnecessary to prohibit the skip operation. Further, each user can watch/listen to CMs which the user himself/herself likes.

By registering actual watching/listening record of CM, program and program section of each user, the advertisement rate or the program use fees can be determined on the basis of the actual performance of watching/listening. In this point, as compared with a case where the advertisement rate or the program use fees are determined on the basis of the future watching/listening prediction calculated on the basis of past audience rates, more reliable data to set the charges can be supplied.

The action of recording a content without watching/listening and then reproducing the content thus recorded has not contributed to the audience rate. However, according to the present invention, the action of recording and then reproducing a program may contribute to the audience rate of the program.

The series of processing described above can be executed by hardware, however, may be executed by software. When the series of processing is executed by the software, a program constituting the software is installed from a network or recording medium into a computer mounted in a dedicated hardware, a computer such as a general personal computer which can execute various functions by installing various kinds of programs therein, or the like.

As shown in Fig. 2 or 3, the recording medium is constructed by not only a program-recorded package medium comprising a magnetic disk 41, 141 (containing floppy disk), an optical disk 42, 142 (containing CD-ROM (Compact Disk-Read Only Memory), DVD (Digital Versatile Disk)), a magnetooptical disk 43, 143 (containing MD (Mini-Disk)) or a semiconductor memory 44, 144, which is distributed separately from the device itself to supply the program to users, but also by a program-recorded ROM 22, 122 or hard disk contained in a storage portion 29, 128, which is supplied to the users in a state where it is installed in the device itself in advance.

In this specification, the step of describing the program to be recorded in a recording medium contains the processing which is executed time-sequentially along the recording order, but it may also contain the processing which is not time-sequentially executed, but executed in parallel or individually.

Furthermore, in this specification, the system represents the whole device comprising plural devices.

### INDUSTRIAL APPLICABILITY

As described above, according to the first information supply system of the present invention, the reproduction data containing prohibiting information for prohibiting skip of prescribed information are distributed from the information supply device to the information processing device so that the skip of the prescribed information is controlled on the basis of the prohibition information in the information processing device. Therefore, there can be implemented a system which can enhance the watching/listening efficiency of the prescribed information.

According to the first information supply device and method, the recording medium and the program of the present invention, the prohibiting information for prohibiting skip of prescribed information is added to reproduction data, so that the information processing device can be made to surely watch/listen to the prescribed information.

According to the first information supply device and method, the recording medium and the program of the present invention, the skip of the prescribed information is controlled on the basis of the prohibiting information contained in the reproduction data. Therefore, users can be made to surely watch/listen to prescribed information.

According to the second information supply system of the present invention, reproduction data containing extraction information for extracting prescribed information containing a content are generated in the information supply device, and distributed to the information processing device. In the information processing device, the reproduction data are recorded so that the prescribed information can be extracted from the content on the basis of the extraction information and read out independently of the content. Therefore, the prescribed information can be surely recorded in the information processing device.

According to the second information processing device and method, the recording medium and the program of the present invention, the prescribed information extracted from a content can be recorded so as to be read out independently of the content. Therefore, the prescribed information can be surely reproduced in connection with reproduction of the content.

According to the second information supply device and method, the recording medium and the program of the present invention, reproduction data containing extraction information needed to extract prescribed information contained in a content are generated and transmitted to the information processing device, so that the prescribed information can be surely recorded in the information processing device.

Other aspects and features of the invention are set out in the following numbered clauses:

### CLAUSES

1. An information supply system for supplying information from an information supply device through a network to an information processing device, **characterized in that** said information supply device generates reproduction data which define the reproduction sections of a content and the order thereof and contain prohibition information for prohibiting skip of predetermined information and distributes the reproduction data from said information supply device through said network to said information processing device,
   said information supply device reproduces a pre-stored content on the basis of the reproduction data, and
   in a case where skip of predetermined information is instructed by a user, said information processing device prohibits the skip of the predetermined position in spite of the instruction from the user when prohibition information is added, or skips the predetermined information in response to the instruction from the user when no prohibition information is added.
2. An information supply device for supplying reproduction data defining the reproduction sections of a content and the order thereof through a network to an information processing device, characterized by comprising:
   generating means for generating reproduction data based on the content;
   detection means for detecting whether the predetermined information is contained in the content or not; and
   adding means for adding the reproduction data with the prohibition information for prohibiting the skip of the predetermined information when the predetermined information is detected by said detection means.
3. The information supply device as in clause 2, wherein the predetermined information is commercial information.
4. An information supply method for an information supply device for supplying reproduction data defining the reproduction sections of a content and the order thereof through a network to an information processing device, comprising the steps of:
   a step of generating reproduction data based on a content;
   a detection step of detecting whether predetermined information is contained in the content; and
   an addition step of adding the reproduction data with prohibition information for prohibiting skip of the predetermined information when the predetermined information is detected through the processing of the detection step.
5. A recording medium recorded with a computer-readable program for an information supply apparatus for supplying reproduction data defining the reproduction sections of a content and the order thereof through a network to an information processing device, **characterized in that** said program contains:
   a step of generating reproduction data based on the content;
   a detection step of detecting whether predetermined information is contained in the content; and
   an addition step of adding the reproduction data with prohibition information for prohibiting skip of the predetermined information when the predetermined information is detected through the processing of the detection step.
6. A program for a computer for controlling an information supply apparatus for supplying reproduction data defining the reproduction sections of a content and the order thereof through a network to an information processing device, **characterized in that** said program makes the computer execute:
   a step of generating reproduction data based on a content;
   a detection step of detecting whether predetermined information is contained in the content; and
   an addition step of adding the reproduction data with prohibition information for prohibiting skip of the predetermined information when the predetermined information is detected through the processing of the detection step.
7. An information processing device for receiving reproduction data defining the reproduction sections of a content and the order thereof from an information supply device through a network and reproducing the content on the basis of the reproduction data, characterized by comprising:
   reproducing means for reproducing the content on the basis of the reproduction data;
   detecting means for detecting an instruction of skipping the content;
      judging means for judging whether prohibition information for prohibiting the skip of the content is added to the reproduction data when the skip instruction of the content is detected by said detection means; and
   control means for controlling the skip of the content on the basis of the judgment result of said judging means.
8. The information processing device as in clause 7, wherein the predetermined information is commercial information.
9. The information processing device as in clause 7, further comprising:
   reception means for receiving the content; and
   storage means for storing the content received by said reception means.
10. An information processing method for an information processing device for receiving reproduction data defining the reproduction sections of a content and the order thereof from an information supply device through a network and reproducing the content on the basis of the reproduction data, characterized by comprising:
   a reproduction step of reproducing the constants based on the reproduction data;
   a detection step of detecting an instruction of skipping the content;
   a judging step of judging whether prohibition information for prohibiting the skip of the content is added to the reproduction data when the skip instruction of the content is detected through the processing of said detection step; and
   a control step of controlling the skip of the content on the basis of the judgment result of the processing of said judging step.
11. A recording medium recorded with a computer-readable program for an information processing device for receiving reproduction data defining the reproduction sections of a content and the order thereof from an information supply device through a network and reproducing the content on the basis of the reproduction data, **characterized in that** said program contains:
   a reproduction step of reproducing the constants based on the reproduction data;
   a detection step of detecting an instruction of skipping the content;
   a judging step of judging whether prohibition information for prohibiting the skip of the content is added to the reproduction data when the skip instruction of the content is detected through the processing of said detection step; and
   a control step of controlling the skip of the content on the basis of the judgment result of the processing of said judging step.
12. A program for a computer for controlling an information processing device for receiving reproduction data defining the reproduction sections of a content and the order thereof from an information supply device through a network and reproducing the content on the basis of the reproduction data, **characterized in that** said program makes the computer execute:
   a reproduction step of reproducing the constants based on the reproduction data;
   a detection step of detecting an instruction of skipping the content;
   a judging step of judging whether prohibition information for prohibiting the skip of the content is added to the reproduction data when the skip instruction of the content is detected through the processing of said detection step; and
   a control step of controlling the skip of the content on the basis of the judgment result of the processing of said judging step.
13. An information supply system for supplying information from an information supply device through a network to an information processing device, **characterized in that**
   said information supply device generates reproduction data which define the reproduction sections of a content and the order thereof and contain extraction information for extracting predetermined information contained in the content, and
   distributes the reproduction data from the information supply device through the network to the information processing device; and
   said information processing device receives and stores the content, extracts the predetermined information from the content received on the basis of the extraction information of the reproduction data distributed, and records the predetermined information so that the predetermined information can be read out independently from the content.
14. An information processing device, characterized by comprising:
   first reception means for receiving a content containing predetermined information;
   extracting means for extracting the predetermined information from the content received by said first reception means; and
   recording means for recording the predetermined information extracted by said extracting means so that the predetermined information can be read out independently from the content.
15. The information processing device as in clause 14, further comprising:
   selecting means for selecting one information from the predetermined information recorded in said recording means; and
   output means for outputting the predetermined information selected by said selecting means in connection with the output of the content.
16. The information processing device as in clause 15, further comprising time counting means for performing time counting, wherein said output means outputs the predetermined information in connection with the output of the content when a predetermined time is counted by said time counting means.
17. The information processing device as in clause 15, wherein said output means replaces the predetermined information contained in the content with the predetermined information selected by said selecting means.
18. The information processing device as in clause 15, wherein said output means outputs the predetermined information at the head or end of the content.
19. The information processing device as in clause 15, further comprising achieving means for achieving taste information of the user of said information processing device, wherein said selecting means selects one information from the predetermined information recorded by said recording means on the basis of the taste information achieved by said achieving means.
20. The information processing device as in clause 15, further comprising second reception means for receiving from an information supply device through a network a selection signal which is used to select one information from the predetermined information recorded in said recording means and given every content or every user of said information processing device, wherein said selecting means selects one information from the predetermined information recorded in said recording means on the basis of the selection signal received by said second reception means.
21. The information processing device as in clause 20, further comprising:
   achieving means for achieving the section information corresponding to the sections of the content recorded in the recording means; and
   transmitting means for transmitting the section information achieved by said achieving means through said network to said information supply device.
22. The information processing device as in clause 21, further comprising operation detecting means for detecting a user's operation on watching/listening of the content, wherein said transmitting means further transmit the operation information detected by said operation detecting means through the network to the information supply device.
23. The information processing device as in clause 21, further comprising watching/listening completed section information detecting means for detecting the watching/listening completed section information corresponding to a section which is watched/listened to by the user in the content recorded in the recording means, wherein said transmitting means further transmit the watching/listening completed section information detected by said watching/listening completed section information detecting means through the network to the information supply device.
24. The information processing device as in clause 23, further comprising:
   holding means for holding the selection signal received by said second reception means; and
   specifying means for specifying watched/listened predetermined information on the basis of watching/listening completed section information detected by said watching/listening completed section information detecting means and the predetermined information held by said holding means, wherein said transmitting means further transmits through the network to the information supply device the watched/listened predetermined information specified by said specifying means in addition to the watching/listening completed section information detected by said watching/listening completed section information detecting means.
25. The information processing device as in clause 14, further comprising second reception means for receiving from the information supply device through the network reproduction data which define the reproduction sections of a content and the order thereof and contain extraction information needed to extract predetermined information, wherein said extracting means extracts the predetermined information from the content received by said first reception means on the basis of the extraction information received by said second reception means.
26. The information processing device as in clause 14, further comprising second reception means for receiving from the information supply device through the network a recording request signal for requesting recording of predetermined information, wherein said recording means records the predetermined information received by said first reception means on the basis of the recording request signal received from the second reception means.
27. An information processing method, characterized by comprising:
   a reception step of receiving a content containing predetermined information;
   an extracting step of extracting the predetermined information from the content received through the processing of said reception step; and
   a recording step of recording the predetermined information extracted through the processing of the extracting step so that the predetermined information is read out independently from the content.
28. A recording medium recorded with a computer-readable program, **characterized in that** said program contains:
   a reception step of receiving a content containing predetermined information;
   an extracting step of extracting the predetermined information from the content received through the processing of said reception step; and
   a recording step of recording the predetermined information extracted through the processing of the extracting step so that the predetermined information is read out independently from the content.
29. A program for making a computer execute:
   a reception step of receiving a content containing predetermined information;
   an extracting step of extracting the predetermined information from the content received through the processing of said reception step; and
   a recording step of recording the predetermined information extracted through the processing of the extracting step so that the predetermined information is read out independently from the content.
30. An information supply device for supplying information through a network to an information processing device, characterized by comprising:
   first generating means for generating reproduction data which define the reproduction sections of a content and the order thereof and contain extraction information needed to extract predetermined information contained in the content; and
   first transmitting means for transmitting the reproduction data generated by said first generating means to the information processing device through the network.
31. The information supply device as in clause 30, wherein the predetermined information is commercial information.
32. The information supply device as in clause 30, further comprising:
   second generating means for generating a recording request signal for requesting recording of the predetermined information contained in the content; and
   second transmitting means for transmitting the recording request signal generated by said second generating means through the network to the information processing device.
33. The information supply device as in clause 30, further comprising:
   second generating means for generating a selection signal to select one information from the predetermined information recorded in the information processing device; and
   second transmitting means for transmitting the selection signal generated by said second generating means through the network to the information processing device.
34. The information supply device as in clause 33, further comprising:
   reception means for receiving section information corresponding to the section of the content recorded in the information processing device from the information processing device through the network;
   first holding means for holding the predetermined information;
   second holding means for holding information on the content; and
   search means for searching the predetermined information held in the information processing device on the basis of the predetermined information held in said first holding means, the information on the content held in said second holding means and the section information received by said reception means, wherein said second generating means generates the selection signal on the basis of the search result of said search means.
35. The information supply device as in clause 34, wherein when it is searched that the information processing device does not have the first predetermined information in the predetermined information, said search means further searches first-predetermined-information receptable time and broadcast channel on the basis of the information on the content held in said second holding means, wherein said first transmitting means further transmits to the information processing device a request signal for requesting to receive and record the first predetermined information on the basis of the first-predetermined-information receptable time and broadcast channel searched by said search means.
36. The information supply device as in clause 34, further comprising:
   first achieving means for achieving from the information processing device through the network the watching/listening completed section information corresponding to a section in the content recorded in the information processing device, the section concerned being watched/listened to by a user;
   specifying means for specifying watching/listening completed predetermined information on the basis of the watching/listening completed section information achieved by said first achieving means and the predetermined information held by said first holding means; and
   third holding means for holding as user information for each user the watching/listening completed section information achieved by said achieving means and the watching/listening completed predetermined information specified by said specifying means.
37. The information supply device as in clause 36, further comprising:
   calculating means for calculating at least one of the number of content viewers and the audience rate every predetermined information, every content or every section on the basis of the watching/listening completed section information achieved by said first achieving means and the watching/listening completed predetermined information specified by said specifying means; and
   fourth holding means for holding the number of viewers or audience rate calculated by said calculating means.
38. The information supply device as in clause 37, wherein said calculating means further calculates charging information every predetermined information supplier on the basis of the information held in said fourth holding means.
39. The information supply device as in clause 37, wherein said fourth holding means further holds use conditions for right holders of contents, and said calculating means further calculates counter values for the contents of the right holders on the basis of the use conditions and the watching/listening completed section information.
40. The information supply device as in clause 39, wherein said calculating means further calculates the counter values for the contents of the right holders on the basis of the viewer number or the audience rate.
41. The information supply device as in clause 37, further comprising second achieving means for achieving user's taste information of the information processing device on the basis of the watching/listening completed section information achieved by said achieving means and the watching/listening completed predetermined information specified by said specifying means.
42. The information supply device as in clause 36, wherein said first achieving means further achieve the operation information corresponding to a user's operation on the content watching/listening through the network from the information processing device, and said specifying means further specifies the watching/listening completed predetermined information on the basis of the operation information achieved by the said first achieving means.
43. The information supply device as in clause 36, further comprising:
   calculating means for calculating at least one of the number of content viewers and the audience rate every predetermined information, every content or every section on the basis the watching/listening completed section information achieved by said first achieving means and the watching/listening completed predetermined information specified by said specifying means; and
   fourth holding means for holding the viewer number or audience rate thus calculated by said calculating means.
44. The information supply device as in clause 33, further comprising:
   reception means for receiving from the information processing device through the network the watching/listening completed section information corresponding to watching/listening completed sections in the sections of the content recorded in the information processing device and the watching/listening completed predetermined information of the predetermined information; and
   holding means for holding the watching/listening completed section information and the watching/listening completed predetermined information as user information of each user.
45. An information supply method for an information supply device for supplying information through a network to an information processing device, characterized by comprising:
   a generating step of generating reproduction data which define the reproduction sections of a content and the order thereof and contain extraction information needed to extract predetermined information contained in the content; and
   a transmitting step of transmitting the reproduction data generated through the processing of said generating step to the information processing device through the network.
46. A recording medium recorded with a computer-readable program, **characterized in that** said program contains:
   a generating step of generating reproduction data which define the reproduction sections of a content and the order thereof and contain extraction information needed to extract predetermined information contained in the content; and
   a transmitting step of transmitting the reproduction data generated through the processing of said generating step to the information processing device through the network.
47. A program for a computer for controlling an information supply device which supplies information through a network to an information processing device, **characterized in that** said program makes the computer execute:
   a generating step of generating reproduction data which define the reproduction sections of a content and the order thereof and contain extraction information needed to extract predetermined information contained in the content; and
   a transmitting step of transmitting the reproduction data generated through the processing of said generating step to the information processing device through the network.

## Claims

1. An information processing apparatus comprising
first receiving means for receiving content with predetermined information; extracting means for extracting the predetermined information;
recording means for recording the predetermined information;
second receiving means for receiving selection signal to select an information; selection means for selecting one information from the stored predetermined information, based on the selection signal;
section means for generating section information indicating section of content that is watched by a user;
specifying means for specifying the predetermined information watched by a user, based on the section information and the selection signal;
transmitting means for transmitting information for the predetermined information watched by a user.

2. An information processing device as claimed in claim 1, further comprising operation detecting means for detecting a user's operation on watching/listening of the content, wherein said transmitting means further transmit the operation information detected by said operation detecting means through the network.

3. The information processing device as claimed in claim 1, wherein said section means comprises watching/listening completed section information detecting means for detecting the watching/listening completed section information corresponding to a section which is watched/listened to by the user in the content recorded in the recording means, wherein said transmitting means further transmit the watching/listening completed section information detected by said watching/listening completed section information detecting means through the network.

4. The information processing device as claimed in claim 3, further comprising:
holding means for holding the selection signal received by said second receiving means; and wherein
the specifying means specifies watched/listened predetermined information on the basis of watching/listening completed section information detected by said watching/listening completed section information detecting means and the predetermined information held by said holding means, wherein said transmitting means further transmits through the network to the information supply device the watched/listened predetermined information specified by said specifying means in addition to the watching/listening completed section information detected by said watching/listening completed section information detecting means.

5. An information processing method comprising:
a first receiving step for receiving content with predetermined information;
an extracting step for extracting the predetermined information;
a recording step for recording the predetermined information;
a second receiving step for receiving a selection signal selecting an information from the predetermined information;
a section step for generating section information indicating a section of content being watched by a user;
a specifying step for specifying the predetermined information watched by a user based on the section information and the selection signal;
a transmitting step for transmitting information regarding the predetermined information watched by a user.

6. An information method according to claim 5, further comprising an operation detecting step for detecting a user's operation on watching/listening to the content, wherein said transmitting step further transmits the operation information detected by said operation detecting means.

7. An information method according to claim 5, wherein said section step comprises a watching/listening completed section information detecting step for detecting the watching/listening completed section information corresponding to a section which is watched/listened to by the user in the content recorded in the recording means, and wherein said transmitting step further transmits the watching/listening completed section information detected by said watching/listening completed section information detecting step through the network.

8. An information method according to claim 7, further comprising a holding step for holding the selection signal received in said second receiving step; and wherein the specifying step specifies watched/listened predetermined information on the basis of watching/listening completed section information detected by said watching/listening completed section information detecting step and the predetermined information held in said holding step, wherein said transmitting step further transmits through the network the watched/listened predetermined information specified by said specifying step in addition to the watching/listening completed section information detected in said watching/listening completed section information detecting step.

9. A computer program product stored on a computer readable medium comprising a program configured when run on a processor to control the processor to perform the steps of a method according to any one to claims 5 to 8.
